# EUROPEAN PATENT APPLICATION

(11) **EP 4 825 227 A1**
(43) Date of publication of application: **21.10.2026**
(21) Application number: 23961452.2
(22) Date of filing: 13.12.2023
(51) Int. Cl.: A24F 40/53

(54) **POWER SUPPLY UNIT FOR AEROSOL GENERATION DEVICE**

(71) Applicant: Japan Tobacco Inc., Tokyo 105-6927 (JP)
(72) Inventor: NAGAHAMA Toru, Tokyo 130-8603 (JP)
(74) Representative: Hoffmann Eitle
(86) International application number: PCT/JP2023/044696
(87) International publication number: WO 2025/126386

(57) **Abstract**

The power supply unit (110) of the inhalation device (100) comprises: a power source unit (111), and a control unit (116) configured to control at least one of charging and discharging of the power supply unit (111). The power source unit (111) is replaceably and removably mounted in the power supply unit (110). The control unit (116) is capable of performing an identification process to identify the type of power source unit (111) mounted in the power supply unit (110).

## Description

### TECHNICAL FIELD

The present disclosure relates to a power supply unit for an aerosol-generating device.

### BACKGROUND ART

Conventionally, an inhalation device that generates aerosols with added flavoring, and allows the user to inhale the generated aerosols is known as an aerosol-generating device. This kind of inhalation device typically generates the aerosol by heating an aerosol source by means of a heating unit which is an electrically-resistive or inductively-heated heater, by supplying the heating unit with power from a power source.

In this type of inhalation device, it is known that the battery can be replaced by a user, as in the inhalation devices described in PTL 1 to 5.

### CITATION LIST

### PATENT LITERATURE

PTL 1: CN 107373765 A
PTL 2: CN 208480616 U
PTL 3: CN 206507325 U
PTL 4: CN 204407377 U
PTL 5: CN 209609859 U

### SUMMARY OF INVENTION

### TECHNICAL PROBLEM

In inhalation devices in which the battery can be replaced by a user, the battery may be replaced with a different type of battery. In this case, in the control of the battery in the inhalation device, the optimal control values may vary depending on the specifications and characteristics of the type of battery installed in the inhalation device. Therefore, in the control of the battery in the inhalation device, it is desirable to identify the type of battery installed in the inhalation device in order to provide optimal control, depending on the specifications and characteristics of the type of battery installed in the inhalation device.

The present disclosure discloses a power supply unit of an aerosol-generating device that is able to identify the type of power source unit installed.

### SOLUTION TO PROBLEM

The power supply unit for an aerosol-generating device for generating an aerosol by heating an aerosol source according to the present disclosure comprises:
a power source unit; and
a control unit configured to control at least one of charging and discharging of the power source unit,
wherein
the power source unit is replaceably and removably installed in the power supply unit, and
the control unit is capable of performing an identification process to identify the type of the power source unit installed in the power supply unit.

### ADVANTAGEOUS EFFECTS OF INVENTION

According to the power supply unit for an aerosol-generating device of the present disclosure, the type of power source unit installed can be identified.

### BRIEF DESCRIPTION OF DRAWINGS

Fig. 1 is a schematic diagram schematically showing a first configuration example of an inhalation device according to the present disclosure;
Fig. 2 is a schematic diagram schematically showing a second configuration example of an inhalation device according to the present disclosure;
Fig. 3 is an overall oblique view of the inhalation device according to the present disclosure;
Fig. 4 is a schematic diagram to explain an operating mode of the inhalation device according to the present disclosure;
Fig. 5 is a schematic diagram to explain a first example of how the power source unit in the inhalation device according to the present disclosure can be attached and detached;
Fig. 6 is a schematic diagram to explain a second example of how the power source unit in the inhalation device according to the present disclosure can be attached and detached;
Fig. 7 is a schematic diagram to explain a third example of how the power source unit in the inhalation device according to the present disclosure can be attached and detached;
Fig. 8 is a flowchart showing a control flow when the power source unit is replaced in the inhalation device according to the present disclosure;
Fig. 9 is a flowchart showing a first example of a mode for determining whether a power source unit has been replaced in the inhalation device according to the present disclosure;
Fig. 10 is a flowchart showing a second example of a mode of determining whether a power source unit has been replaced in the inhalation device according to the present disclosure;
Fig. 11 is a schematic diagram to explain a first example of a method of identifying the type of power source unit installed in the power supply unit in the inhalation device according to the present disclosure;
Fig. 12 is a schematic diagram to explain a second example of a method of identifying the type of power source unit installed in the power supply unit in the inhalation device according to the present disclosure;
Fig. 13 is a schematic diagram to explain a third example of a method of identifying the type of power source unit installed in the power supply unit in the inhalation device according to the present disclosure;
Fig. 14 is a schematic diagram schematically showing one configuration example of the charging and discharging portion of the power source unit in the inhalation device according to the present disclosure;
Fig. 15 is a flowchart illustrating the process of altering various control values used to control the power source unit, performed by the control unit of the inhalation device according to the present disclosure;
Fig. 16 is a flowchart illustrating the process for determining whether heating control is possible or not, performed by the control unit of the inhalation device according to the present disclosure;
Fig. 17 is a diagram showing the change in the output voltage of the power source unit when the user initiates a heating start operation and power is supplied to the heating unit for a short period of time, for a case where a type a power source unit is installed in the inhalation device according to the present disclosure, and a case where a type b power source unit is installed; and
Fig. 18 is a diagram showing the charging control of the power source unit in the inhalation device according to the present disclosure.

### DESCRIPTION OF EMBODIMENTS

In the following, an embodiment of the power supply unit, control method, and control program of the aerosol-generating device according to the present disclosure is described in detail, with reference to the drawings. The embodiment described below is an exemplary case in which the aerosol-generating device according to the present disclosure is applied to an inhalation device. Note that the drawings are to be viewed in the orientation of the reference signs. Furthermore, hereinafter, identical or similar elements may be assigned identical or similar reference signs, and descriptions thereof may be omitted or simplified as appropriate.

### 1. Configuration example of Inhalation Device

The inhalation device which constitutes one example of the aerosol-generating device according to the present disclosure, is a device for generating a substance to be inhaled by a user. Hereinafter, the substance generated by the inhalation device is described as being an aerosol. Alternatively, the substance generated by the inhalation device may be a gas.

### 1-1. First Configuration Example of Inhalation Device

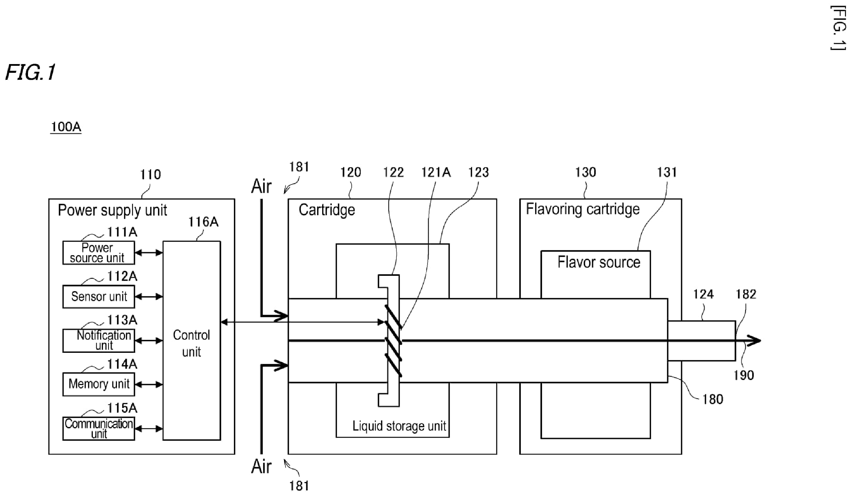

Fig. 1 is a schematic diagram schematically showing a first configuration example of an inhalation device. As shown in Fig. 1, an inhalation device 100A according to this configuration example includes a power supply unit 110, a cartridge 120, and a flavoring cartridge 130. The power supply unit 110 comprises a power source unit 111A, a sensor unit 112A, a notification unit 113A, a memory unit 114A, a communication unit 115A, and a control unit 116A. The cartridge 120 includes a heating unit 121A, a liquid guiding portion 122, and a liquid storage portion 123. The flavoring cartridge 130 includes a flavor source 131 and a mouthpiece 124. An air flow path 180 is formed in the cartridge 120 and the flavoring cartridge 130.

The power source unit 111A stores electrical power. The power source unit 111A then supplies the electrical power to each component of the inhalation device 100A in accordance with control performed by the control unit 116A. Furthermore, the power source unit 111A is configured to be chargeable by means of power received from an external power source 1000. Here, predetermined power is power that the inhalation device 100A is capable of receiving in terms of hardware, and may be, for example, DC power having a predetermined voltage (for example, 5 to 20 [V]). The external power source 1000 may be an alternating current (AC) adapter configured to be capable of outputting the predetermined power, for example. Furthermore, the external power source 1000 is not limited to an AC adapter, and may be, for example, a portable charger (also referred to as a mobile battery), a personal computer (PC), a smartphone, or a tablet terminal, or the like. The power source unit 111A may be configured, for example, by a rechargeable battery such as a lithium ion secondary battery. In the present embodiment, the power source unit 111A is mounted so that it can be installed in and removed from the power supply unit 110 by a user.

The sensor unit 112A acquires various types of information relating to the inhalation device 100A. The sensor unit 112A is configured by, for example, a pressure sensor such as a capacitor microphone, a flow rate sensor or a temperature sensor, etc., and acquires values associated with inhalation by a user.

As an example, the sensor unit 112A may include a pressure sensor (also referred to as a "puff sensor") capable of detecting a change in pressure (also referred to hereinafter as "internal pressure") in the inhalation device 100A caused by inhalation by the user. As another example, the sensor unit 112A may include a flow sensor capable of detecting a flow rate caused by inhalation by the user (hereinafter simply referred to as "flow rate"). As another example, the sensor unit 112A may include a temperature sensor (also referred to as a "puff thermistor") capable of detecting the temperature of the heating unit 121A or the temperature around the heating unit 121A.

Furthermore, the sensor unit 112A may include a voltage sensor capable of measuring the terminal voltage of the power source unit 111A. The sensor unit 112A may also include a temperature sensor capable of measuring the temperature of the power source unit 111A.

Furthermore, the sensor unit 112A may comprise an input device, such as an operation button or a switch, for accepting input of information from the user. As an example, the sensor unit 112A may include an operation button serving as the input device that accepts mode change requests, which will be described later.

The notification unit 113A notifies the user of information. The notification unit 113A may, for example, be configured by a light-emitting device that emits light, a display device that displays images, a sound output device that outputs sound, or a vibration device that vibrates, and so on.

The memory unit 114A stores various information (for example, programs and data) for operation of the inhalation device 100A. The memory unit 114A may be configured by a non-volatile storage medium such as a flash memory, for example.

The communication unit 115A is a communication interface capable of performing communication conforming to any wired or wireless communication standard. Examples of communication standards that may be used include standards that employ Wi-Fi (registered trademark), Bluetooth (registered trademark), BLE (Bluetooth Low Energy) (registered trademark), NFC (Near-Field Communication), or LPWA (Low Power Wide Area).

The control unit 116A functions as an arithmetic processing device and a control device, and controls overall operation within the inhalation device 100A in accordance with various programs stored in the memory unit 114A, etc. For example, the control unit 116A controls the supply of electricity (power supply) from the power source unit 111A to each constituent component (for example, the heating unit 121A that will be described later), and controls charging of the power source unit 111A by means of power received from the external power source 1000. Note that the control unit 116A is realized by a central processing unit (CPU) or an electronic circuit such as a microprocessor, for example. As an example, the control unit 116A can be realized by a Micro Controller Unit (MCU) 104, or the like, which will be described later.

The liquid storage portion 123 stores an aerosol source. The aerosol source is atomized to generate an aerosol. The aerosol source is a polyhydric alcohol such as glycerol or propylene glycol, or a liquid such as water, for example. The aerosol source may include a tobacco-derived or non-tobacco-derived flavor component. If the inhalation device 100A is a medical inhaler such as a nebulizer, the aerosol source may include a drug.

The liquid guiding portion 122 guides the aerosol source, which is a liquid stored in the liquid storage portion 123, from the liquid storage portion 123, and holds the aerosol source. The liquid guiding portion 122 is, for example, a wick formed by twisting either a fibrous material such as glass fibers or a porous material such as a porous ceramic. In this case, the aerosol source stored in the liquid storage portion 123 is guided by the capillary effect of the wick.

The heating unit 121A heats the aerosol source to atomize the aerosol source, thereby generating the aerosol, for example. The heating unit 121A is formed from any material, such as a metal or polyimide, in any shape, such as coiled, film-like, or blade-like. In the example shown in Fig. 1, the heating unit 121A is configured as a coil obtained by winding a heat generating resistor such as nichrome or stainless steel, and is wrapped around the liquid guiding portion 122. When the heating unit 121A generates heat, the aerosol source held in the liquid guiding portion 122 is heated and atomized, generating the aerosol. The heating unit 121A generates heat when supplied with electricity from the power source unit 111A.

As an example, the supply of electricity (power supply) to the heating unit 121A may be implemented when the sensor unit 112A has detected that the user has started inhaling and/or that predetermined information has been input. The supply of electricity to the heating unit 121A may then be stopped when the sensor unit 112A has detected that the user has finished inhaling and/or that predetermined information has been input.

Moreover, the heating unit 121A may be configured to generate an aerosol by means of vibration or induction heating. When the aerosol is generated by means of vibration, the inhalation device 100A comprises a vibration unit as the heating unit 121A. For example, the vibration unit is configured by a plate-shaped member comprising a piezoelectric ceramic functioning as an ultrasonic vibrator. When the vibration unit vibrates, the aerosol source which has been guided to a surface of the vibration unit by means of the liquid guiding portion 122 is then atomized by means of ultrasound generated as the vibration unit vibrates, thereby generating the aerosol.

Furthermore, when the aerosol is generated by means of induction heating, the inhalation device 100A comprises a susceptor and an electromagnetic induction source as the heating unit 121A. The susceptor is made of an electrically conductive material, such as a metal, and generates heat by means of electromagnetic induction. Furthermore, the susceptor is disposed adjacent to the liquid guiding portion 122. As an example, the susceptor is formed by a metallic conducting wire and is wound around the liquid guiding portion 122. The electromagnetic induction source causes the susceptor to generate heat by electromagnetic induction. The electromagnetic induction source is formed by a coiled conducting wire, for example, and generates a magnetic field when supplied with an AC current from the power source unit 111A. When a magnetic field is generated, eddy currents are generated in the susceptor, and Joule heat is generated. The aerosol source held in the liquid guiding portion 122 is then heated by this Joule heat and atomized, generating the aerosol.

The flavor source 131 is a component for imparting a flavor component to the aerosol. The flavor source 131 includes tobacco-derived or non-tobacco-derived flavor components. The flavor source 131 may be, for example, a tobacco-derived substance such as cut tobacco, or a processed product obtained by molding a tobacco raw material into a granular form, a sheet form, or a powder form. Furthermore, the flavor source 131 may also include non-tobacco-derived materials made from plants other than tobacco (e.g., mint and herbs, etc.). As one example, the flavor source 131 may contain a flavoring component such as menthol. Furthermore, the flavor source 131 may be a stick-type member. When the inhalation device 100A is a medical inhaler, the flavor source 131 may contain a drug to be inhaled by a patient. Note that the flavor source 131 is not limited to a solid, and may equally be a polyhydric alcohol such as glycerol or propylene glycol, or a liquid such as water, for example. Furthermore, the flavor source 131 may be disposed inside a container such as a capsule.

The air flow path 180 is a flow path for air to be inhaled by the user. The air flow path 180 has a tubular structure with an air inflow hole 181, which is an inlet for air into the air flow path 180, and an air outflow hole 182, which is an outlet for air from the air flow path 180, at the two ends thereof. Part way along the air flow path 180, the liquid guiding portion 122 is disposed on the upstream side (the side closer to the air inflow hole 181), and the flavor source 131 is disposed on the downstream side (the side closer to the air outflow hole 182). Air that flows in through the air inflow hole 181 as the user inhales is mixed with the aerosol generated by the heating unit 121A and is transported through the flavor source 131 to the air outflow hole 182, as shown by the arrow 190. When the mixed fluid of aerosol and air passes through the flavor source 131, the flavor component contained in the flavor source 131 is added to the aerosol.

The mouthpiece 124 is a member that is held in the user's mouth during inhalation. The air outflow hole 182 is disposed in the mouthpiece 124. The user holds the mouthpiece 124 in their mouth and inhales, making it possible to draw the mixed fluid of aerosol and air into the oral cavity.

A configuration example of the inhalation device 100A has been described above. The inhalation device 100A is, of course, not limited to the configuration described above, and various configurations, such as those illustrated below by way of example, may be adopted.

As an example, the inhalation device 100A need not include the flavoring cartridge 130. In this case, the cartridge 120 is provided with the mouthpiece 124.

As another example, the inhalation device 100A may further include a flavor source heating unit (not shown on the drawings) for heating the flavor source 131. The flavor source heating unit is configured in a film shape and is disposed so as to cover the outer periphery of the flavor source 131, for example. The flavor source heating unit then generates heat when supplied with power from the power source unit 111A, heating the flavor source 131 from the outer periphery of the flavor source 131. Note that the flavor source heating unit may also be configured with a blade-like form, piercing the flavor source 131 to heat the flavor source 131 from the inside, for example. Furthermore, the flavor source heating unit may be configured to heat the flavor source 131 by means of vibration or induction heating. Providing such a flavor source heating unit makes it possible to increase the temperature of the flavor source 131 and to increase the amount of flavor component added to the aerosol, as compared with a case in which the flavor source heating unit is not provided.

Furthermore, as another example, the inhalation device 100A may include a plurality of types of aerosol sources. A plurality of types of aerosol generated from the plurality of types of aerosol sources may be mixed within the air flow path 180 to cause a chemical reaction, thereby generating yet more other types of aerosol.

Furthermore, the means for atomizing the aerosol source is not limited to heating by the heating unit 121A. For example, the means for atomizing the aerosol source may be vibration atomization or induction heating.

### 1-2. Second Configuration Example of Inhalation Device

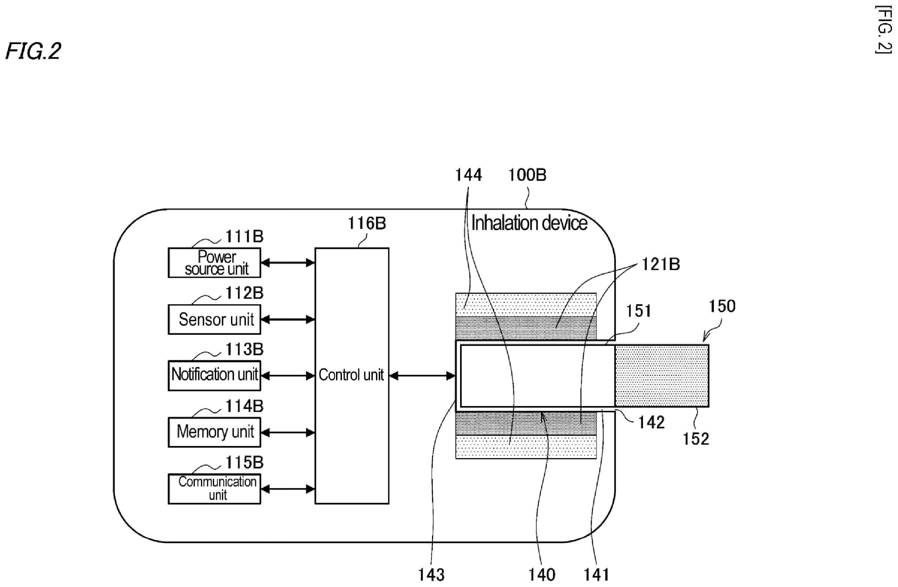

Fig. 2 is a schematic diagram schematically showing a second configuration example of an inhalation device. As shown in Fig. 2, an inhalation device 100B according to this configuration example comprises a power source unit 111B, a sensor unit 112B, a notification unit 113B, a memory unit 114B, a communication unit 115B, a control unit 116B, a heating unit 121B, an accommodating portion 140, and a heat insulating portion 144.

The power source unit 111B, sensor unit 112B, notification unit 113B, memory unit 114B, communication unit 115B, and control unit 116B are each substantially the same as the corresponding component included in the inhalation device 100A described above. Moreover, in the case of the inhalation device 100B shown in Fig. 2, the inhalation device 100B itself may also be referred to as the power supply unit. In this embodiment, the power source unit 111B is mounted so that it can be installed in and removed from the inhalation device 100B by a user.

The accommodating portion 140 has an internal space 141, and holds a stick-type substrate 150 while accommodating a portion of the stick-type substrate 150 in the internal space 141. The accommodating portion 140 has an opening 142 allowing the internal space 141 to communicate with the outside and accommodate the stick-type substrate 150, which has been inserted into the internal space 141 from the opening 142. For example, the accommodating portion 140 is a cylindrical body comprising the opening 142 and a bottom portion 143 serving as a bottom surface, and defines a columnar internal space 141. An air flow path for supplying air to the internal space 141 is connected to the accommodating portion 140. An air inflow hole, which is an inlet for air into the air flow path, is disposed in a side surface of the inhalation device 100, for example. An air outflow hole, which is an outlet for air from the air flow path to the internal space 141, is disposed in the bottom portion 143, for example.

The stick-type substrate 150 comprises a substrate portion 151 and a mouthpiece portion 152. The substrate portion 151 contains an aerosol source. The aerosol source includes a tobacco-derived or non-tobacco-derived flavor component. If the inhalation device 100B is a medical inhaler such as a nebulizer, the aerosol source may include a drug. The aerosol source may, for example, be a liquid such as water or a polyhydric alcohol, for example glycerol or propylene glycol, containing the tobacco-derived or non-tobacco-derived flavor component, or may be a solid including the tobacco-derived or non-tobacco-derived flavor component. In a state in which the stick-type substrate 150 is held in the accommodating portion 140, at least part of the substrate portion 151 is accommodated in the internal space 141, and at least part of the mouthpiece portion 152 protrudes from the opening 142. Then, when the user holds the mouthpiece portion 152 protruding from the opening 142 in their mouth and inhales, air flows into the internal space 141 via the air flow path, which is not illustrated on the drawings, and reaches the inside of the user's mouth together with the aerosol generated from the substrate portion 151.

In the example shown in Fig. 2, the heating unit 121B is configured as a film heater with conductive tracks made of heating resistors whose electrical resistance value and temperature are correlated, and is positioned to cover the outer circumference of the accommodating portion 140. Then, when the heating unit 121B generates heat, the substrate portion 151 of the stick-type substrate 150 is heated from the outer periphery, generating the aerosol. Note that a heat generating resistor the same as that of the heating unit 121A described above may be used as the heat generating resistor of the heating unit 121B.

The heat insulating portion 144 prevents heat transfer from the heating unit 121B to other components. For example, the heat insulating portion 144 is configured from a vacuum heat insulating material or an aerogel heat insulating material, or the like.

A configuration example of the inhalation device 100B has been described above. The inhalation device 100B is, of course, not limited to the configuration described above, and various configurations, such as those illustrated below by way of example, may be adopted.

As one example, the heating unit 121B may be configured with a blade-like form and may be arranged so as to protrude into the internal space 141 from the bottom portion 143 of the accommodating portion 140. In that case, the blade-like heating unit 121B is inserted into the substrate portion 151 of the stick-type substrate 150 and heats the substrate portion 151 of the stick-type substrate 150 from the inside. As another example, the heating unit 121B may be arranged so as to cover the bottom portion 143 of the accommodating portion 140. Furthermore, the heating unit 121B may be configured from a combination of two or more from among a first heating unit covering the outer circumference of the accommodating portion 140, a blade-like second heating unit, and a third heating unit covering the bottom portion 143 of the accommodating portion 140.

As another example, the accommodating portion 140 may include an opening and closing mechanism such as a hinge for opening and closing part of an outer casing that forms the internal space 141. Then, by opening and closing the outer casing, the accommodating portion 140 may accommodate and grip the stick-type substrate 150 that has been inserted into the internal space 141. In this case, the heating unit 121B may be provided on the clamping part of the accommodating portion 140, and may heat the stick-shaped substrate 150 while pressing the same.

Furthermore, the means for atomizing the aerosol source is not limited to heating by the heating unit 121B. For example, the means for atomizing the aerosol source may be induction heating. In that case, the inhalation device 100B comprises at least an electromagnetic induction source such as a coil for generating a magnetic field, instead of the heating unit 121B. A susceptor, which generates heat by means of induction heating, may be provided in the inhalation device 100B, or may be contained in the stick-type substrate 150.

Furthermore, the inhalation device 100B may additionally include the heating unit 121A, the liquid guiding portion 122, the liquid storage portion 123, and the air flow passage 180 according to the first configuration example, and the air flow passage 180 may supply air to the internal space 141. In this case, the mixed fluid of the aerosol generated by the heating unit 121A and air flows into the internal space 141 and is further mixed with the aerosol generated by the heating unit 121B, and reaches the oral cavity of the user.

Note that, hereinafter, the inhalation device 100A and the inhalation device 100B described above will also be referred to, without distinction, as the "inhalation device 100". Similarly, the power source unit 111A and the power source unit 111B may be referred to as the "power source unit 111", the sensor unit 112A and the sensor unit 112B may be referred to as the "sensor unit 112", the notification unit 113A and the notification unit 113B may be referred to as the "notification unit 113", the memory unit 114A and the memory unit 114B may be referred to as the "memory unit 114", the communication unit 115A and the communication unit 115B may be referred to as the "communication unit 115", the control unit 116A and the control unit 116B may be referred to as the "control unit 116", and the heating unit 121A and the heating unit 121B may be referred to as the "heating unit 121".

### 2. Example of External Configuration of Inhalation Device

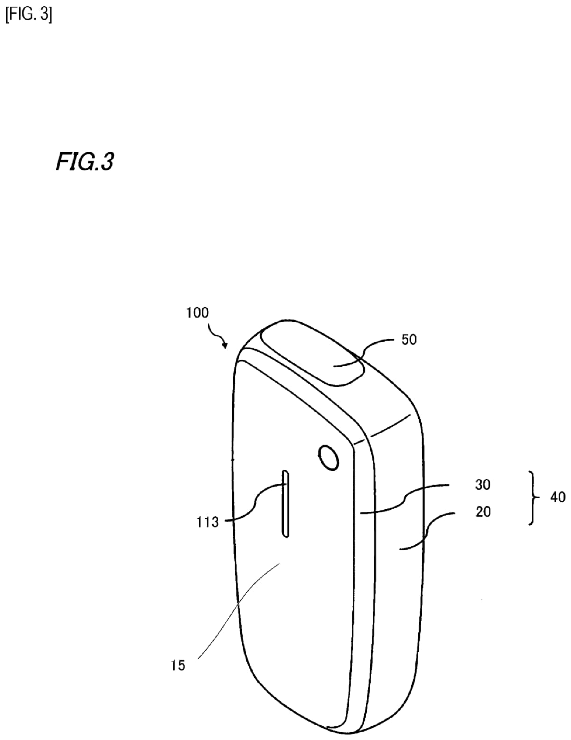

Fig. 3 is an overall oblique view of the inhalation device 100 according to the present embodiment. As shown in Fig. 3, the inhalation device 100 comprises, for example, a case 20, and a shutter 50. The case 20 houses the power supply unit 110 of the inhalation device 100.

The case 20 is also fitted with a panel 30. The panel 30 is attached to the case 20 to configure an outermost housing 40 of the inhalation device 100. Furthermore, the inhalation device 100 includes the panel 30, so that even if the main body 110 generates heat, the heat released to the outside can be mitigated. In other words, the panel 30 functions to insulate the heat generated from the heating unit of the power supply unit 110. The panel 30 is also formed so that the surface thereof is approximately a curved surface. When the panel 30 is attached to the case 20, the panel 30 then defines an internal space together with the surface of the case 20.

When a user presses on a predetermined portion of the surface of the panel 30 with their fingertips, the panel 30 deforms to form an indentation toward the case 20. As a result of this deformation of the panel 30, a protrusion provided on the panel 30 comes into contact with an operation button 28 provided on the surface of the case 20, thereby pressing the operation button 28. In other words, the finger-pressed portion of the surface of the panel 30 constitutes an operation portion 15.

### 3. Example of Operating Modes of the Inhalation Device

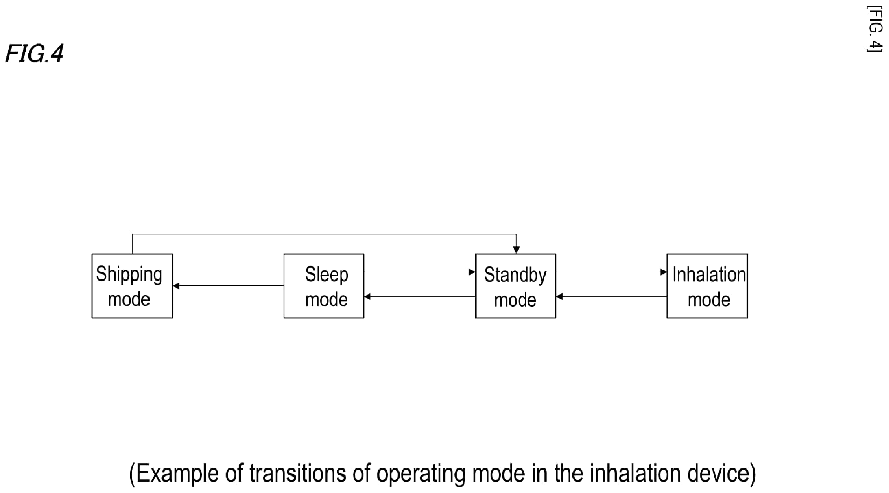

As shown in Fig. 4, the control unit 116 has a plurality of operating modes in which the inhalation device 100 is operated. In the present example, the control unit 116 has an inhalation mode, a standby mode, a sleep mode, and a shipping mode as operating modes for operating the inhalation device 100. The control unit 116 controls the discharge from the power source unit 111 to cause the inhalation device 100 to operate in the inhalation mode, the standby mode,the sleep mode, and the shipping mode.

The inhalation mode is a mode in which heating control of the heating unit 121 is carried out. The control unit 116 carries out heating control of the heating unit 121 when the operating mode is switched to the inhalation mode.

The standby mode is a mode in which almost all functions are active except for heating control of the heating unit 121. The control unit 116 switches the operating mode from the standby mode to the inhalation mode when a predetermined operation is performed, such as an inhalation action by a user. Also, in the inhalation mode, the control unit 116 switches the operating mode from the inhalation mode to the standby mode when heating control of the heating unit 121 ends, such as due to the time of energizing the heating unit 121 or the number of inhalations by the user reaching the upper limit.

The sleep mode is a mode in which the inhalation device 100 consumes less power than the standby mode, and can directly transition to the standby mode. Therefore, the control unit 116 can reduce the power consumption of the power source unit 111 by transitioning the inhalation device 100 to the sleep mode, while maintaining a state in which it is possible to return to other modes as required. When the inhalation device 100 is operating in the sleep mode, the sensor unit 112 can detect opening of the shutter 50, connection of a USB cable, operation of the operation portion 15, and so on, and can monitor the remaining battery charge, but the heating unit 121 cannot be operated immediately. The control unit 116 switches the operating mode from the sleep mode to the standby mode when a predetermined operation is performed, such as operation of the operation portion 15 by a user. Also, the control unit 116 switches the operating mode from the standby mode to the sleep mode when a predetermined condition is met, such as when a state with no operation lasts for a predetermined time in the standby mode.

The shipping mode is a mode in which the inhalation device 100 consumes less power than the sleep mode, the main power supply path from the power source unit 111 is interrupted, and the quiescent current is significantly reduced to minimize power consumption of the power source unit 111. In the shipping mode, discharge from the power source unit 111 is limited to the minimum necessary, for example, for the sensor unit 112 only that required to detect the connection of a USB cable, and so on, and that required to detect when the operation portion 15 is operated, for the control unit 116 only that necessary to change the mode of operation of the inhalation device 100 based on the function of the sensor unit 112 that detects the connection of a USB cable, and so on, and the function of the operation portion 15 that detects when the operation portion 15 is operated. The shipping mode is used, for example, during transportation after manufacturing and shipping of the inhalation device 100, or during long-term storage in a warehouse, and so on, to transport and store the inhalation device 100 with reduced power consumption of the power source unit 111. In this example, shipping mode is also used when replacing the power source unit 111, as will be described later. The control unit 116 switches the operating mode from the shipping mode to the standby mode when a predetermined operation is performed, such as operation of the operation portion 15 by a user or when an external power source 1000 is connected to the inhalation device 100. Note that the control unit 116 may switch the operating mode from the shipping mode to the sleep mode when a predetermined operation is performed, such as operation of the operation portion 15 by a user or when an external power source 1000 is connected to the inhalation device 100.

When in the shipping mode, the control unit 116 transitions the mode to the standby mode due to a predetermined operation by the user. Also, when in the sleep mode, the control unit 116 transitions the mode to the standby mode due to a predetermined operation by the user, and transitions to the shipping mode due to a predetermined operation by the user (an operation different from the operation that transitions to the standby mode). Also, when in the standby mode, the control unit 116 transitions the mode to the inhalation mode due to a predetermined operation by the user, and transitions to the sleep mode due to a predetermined operation by the user (an operation different from the operation which transitions to the inhalation mode). In addition, when in the inhalation mode, the control unit transitions the mode to the standby mode when a predetermined operation by the user is performed or when a predetermined condition is satisfied. Note that, when in the standby mode, the control unit 116 may transition to the shipping mode due to a predetermined operation by the user. In this case, the predetermined operation by the user when transitioning from the sleep mode to the shipping mode and the predetermined operation by the user when transitioning from the standby mode to the shipping mode may be the same operation.

### 4. Insertion and Removal of the Power Source Unit

The power source unit 111 is mounted so that it can be installed in and removed from the power supply unit 110 by a user. It should be noted that in the inhalation device 100, the insertion and removal direction of the flavor source 131 or the stick-type substrate 150 relative to the inhalation device 100 is the vertical direction, and in the inhalation device 100 the side in which the flavor source 131 or the stick-type substrate 150 is inserted is defined as the upper side. In other words, the flavor source 131 or the stick-type substrate 150 are inserted into the inhalation device 100 from the upper side. Also, the direction perpendicular to the vertical direction may be called the transverse direction, and a surface facing the transverse direction may be called a side surface.

Note that although first to third examples are described below as examples of insertion and removal aspects of the power source unit 111, the power source unit 111 can be installed in and removed from the power supply unit 110 by a user by aspects other than the first to third examples.

### 4-1. First Example of an Insertion and Removal Aspect of the Power Source Unit

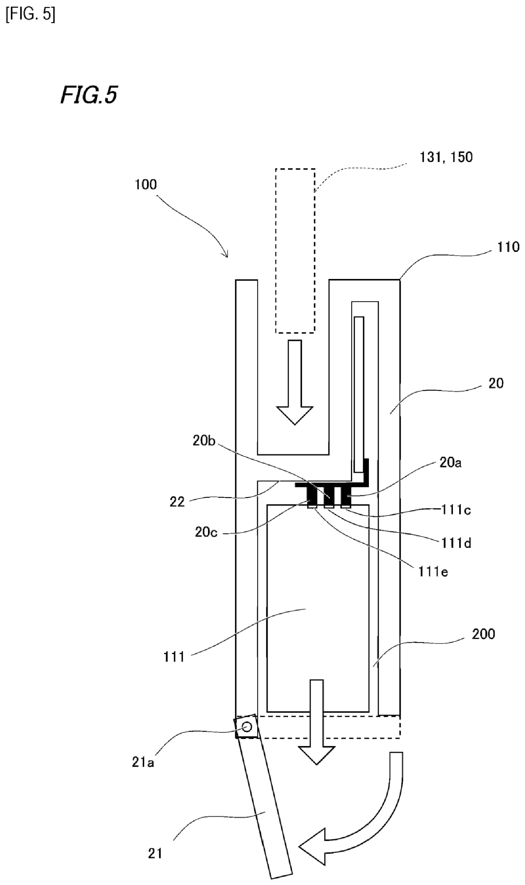

As shown in Fig. 5, the case 20 has a bottom wall portion 21 constituting at least a part of the lower surface thereof, and the bottom wall portion 21 is provided in the case 20 so that it can be opened and closed about the axis of a hinge 21a that extends in a transverse direction.

In the lower region of the case 20, a power supply accommodating portion 200 is formed that can accommodate the power source unit 111. When the bottom wall portion 21 is opened, the power supply accommodating portion 200 is in communication with the outside of the case 20, allowing the power source unit 111 to be inserted into the power supply accommodating portion 200 from the lower side of the case 20. That is, the bottom wall portion 21 acts as an opening and closing member for the power supply accommodating portion 200.

The power source unit 111 comprises a positive electrode terminal 111c and a negative electrode terminal 111d, and a temperature terminal 111e through which an electrical signal relating to the temperature of the power source unit 111 flows. The case 20 is provided with a positive terminal connection 20a for electrically connecting with the positive electrode terminal 111c of the power source unit 111, a negative terminal connection 20b for electrically connecting with the negative electrode terminal 111d of the power source unit 111, and a temperature terminal connection 20c for electrically connecting with the temperature terminal 111e of the power source unit 111. The power source unit 111 is provided with a battery temperature sensor, which is not shown on the drawings. The battery temperature sensor is, for example, a thermistor. The battery temperature sensor outputs a detection signal indicating the electrical resistance value of its own resistor as a measurement signal indicating a parameter relating to the temperature of the power source unit 111. Also, the battery temperature sensor may also output a measurement signal directly indicating the battery temperature. Then, a detection signal indicating a parameter related to the temperature of the power source unit 111 flows to the temperature terminal 111e.

When accommodated in the power supply accommodating portion 200, the power source unit 111 is held by the bottom wall portion 21 and a top wall portion 22 of the power supply accommodating portion 200. The power source unit 111 is held in the power supply accommodating portion 200 with the positive electrode terminal 111c in electrical connection with the positive terminal connection 20a, the negative electrode terminal 111d in electrical connection with the negative terminal connection 20b, and the temperature terminal 111e in electrical connection with the temperature terminal connection 20c.

In this example, the positive electrode terminal 111c, the negative electrode terminal 111d, and the temperature terminal 111e are all provided on an upper surface of the power source unit 111, and the positive terminal connection 20a, the negative terminal connection 20b, and the temperature terminal connection 20c are provided in the top wall portion 22 of the power supply accommodating portion 200.

In the example shown in Fig. 3, when the bottom wall portion 21 is opened with the power source unit 111 contained in the power supply accommodating portion 200, the power supply accommodating portion 200 is in communication with the outside of the case 20, allowing the power source unit 111 to be removed from the power supply accommodating portion 200.

In this way, the power source unit 111 is mounted so that it can be installed in and removed from the power supply unit 110 by a user.

### 4-2.Second Example of an Insertion and Removal Aspect of the Power Source Unit

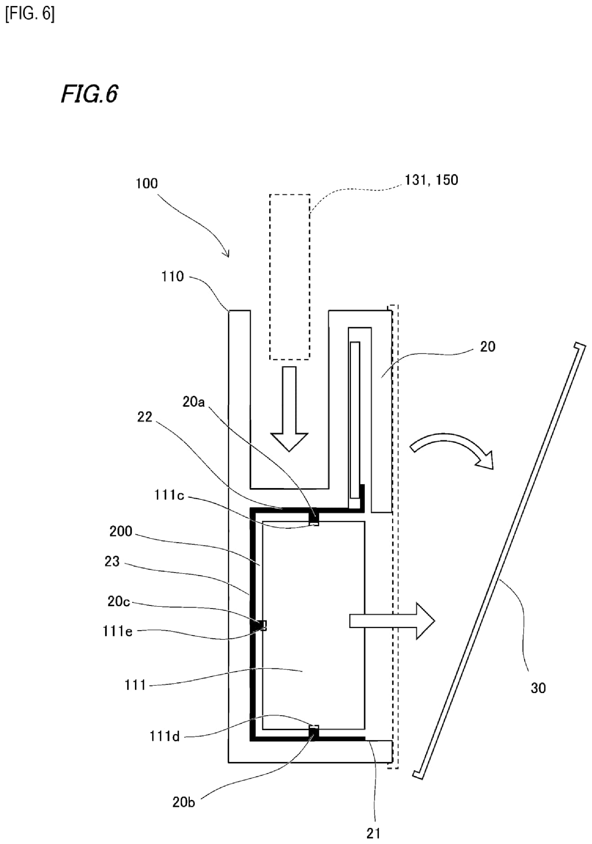

As shown in Fig. 6, in the lower region of the case 20, the power supply accommodating portion 200 is formed and can accommodate the power source unit 111. When the previously described panel 30 is removed from the case 20, the power supply accommodating portion 200 is in communication with the outside of the case 20, allowing the power source unit 111 to be inserted into the power supply accommodating portion 200 from the transverse direction of the case 20. That is, the panel 30 also acts as an opening and closing member for the power supply accommodating portion 200.

The power source unit 111 comprises the positive electrode terminal 111c and the negative electrode terminal 111d, and the temperature terminal 111e through which an electrical signal relating to the temperature of the power source unit 111 flows. The case 20 is provided with the positive terminal connection 20a for electrically connecting with the positive electrode terminal 111c of the power source unit 111, the negative terminal connection 20b for electrically connecting with the negative electrode terminal 111d of the power source unit 111, and a temperature terminal connection 20c for electrically connecting with the temperature terminal 111e of the power source unit 111.

When received in the power supply accommodating portion 200, the power source unit 111 is held in the power supply accommodating portion 200. The power source unit 111 is held in the power supply accommodating portion 200 with the positive electrode terminal 111c in electrical connection with the positive terminal connection 20a, the negative electrode terminal 111d in electrical connection with the negative terminal connection 20b, and the temperature terminal 111e in electrical connection with the temperature terminal connection 20c.

In the present example, the positive electrode terminal 111c is provided on the upper surface of the power source unit 111, the negative electrode terminal 111d on the lower surface of the power source unit 111, the temperature terminal 111e on a side surface of the power source unit 111, and the positive terminal connection 20a is provided on the top wall portion 22 of the power supply accommodating portion 200, the negative terminal connection 20b is provided at the bottom wall portion 21 of the power supply accommodating portion 200, and the temperature terminal connection 20c at a side wall portion 23 of the power supply accommodating portion 200.

When the panel 30 is removed from the case 20 while the power source unit 111 is housed in the power supply accommodating portion 200, the power supply accommodating portion 200 communicates with the outside of the case 20, and the power source unit 111 can be removed from the power supply accommodating portion 200.

In this way, the power source unit 111 is mounted so that it can be installed in and removed from the power supply unit 110 by a user.

### 4-3.Third Example of an Insertion and Removal Aspect of the Power Source Unit

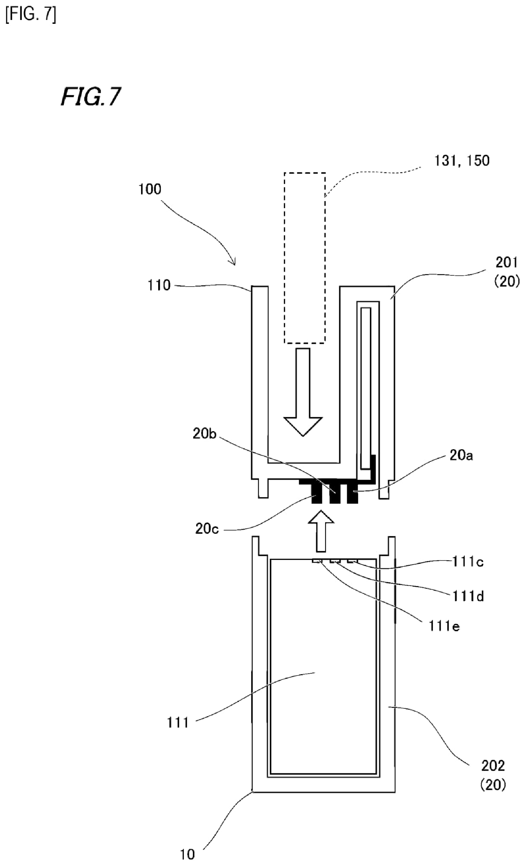

As shown in Fig. 7, the case 20 comprises a top case 201 constituting the outer case of the upper region of the inhalation device 100, and a bottom case 202 constituting the outer case of the lower region of the inhalation device 100.

The bottom case 202 has an open upper surface and houses the power source unit 111 therein. In this way, in the present example, the power source unit 111 and the bottom case 202 constitute a modularized battery pack 10.

The upper surface of the power source unit 111 is provided with the positive electrode terminal 111c and the negative terminal electrode 111d and the temperature terminal 111e through which an electrical signal relating to the temperature of the power source unit 111 flows. At the lower end of the top case 201 are provided the positive terminal connection 20a for electrically connecting with the positive electrode terminal 111c of the power source unit 111, the negative terminal connection 20b for electrically connecting with the negative electrode terminal 111d of the power source unit 111, and the temperature terminal connection 20c for electrically connecting with the temperature terminal 111e of the power source unit 111.

The modularized battery pack 10, which includes the power source unit 111 and the bottom case 202, is mounted in the top case 201 from below. For example, both the top case 201 and the bottom case 202 have a substantially cylindrical shape extending vertically, and threaded grooves have been machined in the outer circumferential surface of one of the lower end of the top case 201 and the upper end of the bottom case 202, and in the inner circumferential surface of the other of the lower end of the top case 201 and the upper end of the bottom case 202. The modularized battery pack 10, which includes the power source unit 111 and the bottom case 202, may be mounted onto the top case 201 by screwing the lower end of the top case 201 and the upper end of the bottom case 202 together. Also, for example, a magnet may be provided at one of the lower end of the top case 201 and the upper end of the bottom case 202, and the other of the lower end of the top case 201 and the upper end of the bottom case 202 is formed of ferromagnetic material. The modularized battery pack 10, which includes the power source unit 111 and the bottom case 202, may be attached to the top case 201 by the lower end of the top case 201 and the upper end of the bottom case 202 being attracted to each other by magnetic force. Also, for example, the bottom case 202 may have a locking portion such as a claw, and the modularized battery pack 10, which includes the power source unit 111 and the bottom case 202, may be attached to the top case 201 by locking the locking portion to the top case 201.

With the modularized battery pack 10, which includes the power source unit 111 and the bottom case 202, attached to the top case 201, the power source unit 111 is held with the positive electrode terminal 111c in electrical connection with the positive terminal connection 20a, the negative electrode terminal 111d in electrical connection with the negative terminal connection 20b, and the temperature terminal 111e in electrical connection with the temperature terminal connection 20c.

In this way, the modularized battery pack 10, which includes the power source unit 111 and the bottom case 202, is detachably mounted on the top case 201, and the power source unit 111 is mounted so that it can be installed in and removed from the power supply unit 110 by the user.

### 5. Control Flow when Power Source Unit is Replaced

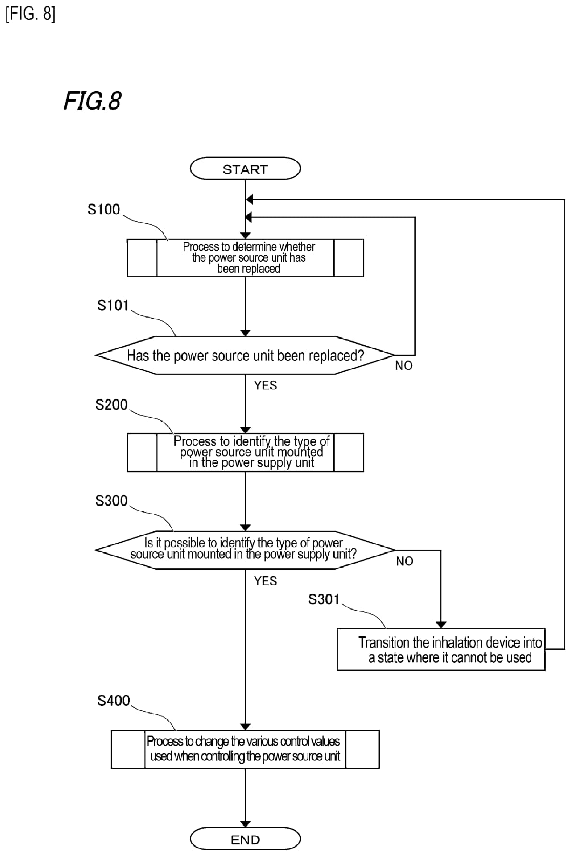

Next, the control flow when the power source unit 111 mounted in the power supply unit 110 is replaced is described with reference to Fig. 8.

The control unit 116 first carries out a process of determining whether the power source unit 111 mounted in the power supply unit 110 has been replaced (step S100). Details of the process of determining whether the power source unit 111 mounted in the power supply unit 110 has been replaced will be described later.

Upon completion of step S100, the control unit 116 proceeds to step S101 and determines whether the power source unit 111 mounted in the power supply unit 110 was determined to have been replaced at step S101.

At step S101, the control unit 116 returns to step S100 if at step S101 it was determined that the power source unit 111 mounted in the power supply unit 110 has not been replaced (step S101: NO).

The control unit 116 proceeds to step S200 when it is determined at step S101 that the power source unit 111 mounted in the power supply unit 110 has been replaced (step S101: YES).

The control unit 116 performs a process to identify the type of power source unit 111 mounted in the power supply unit 110 in step S200. Details of the flow of the process to identify the type of power source unit 111 mounted in the power supply unit 110 will be described later. The routine then advances to step S300.

In this way, when it is determined that the power source unit 111 mounted in the power supply unit 110 has been replaced, the process of identification of the type of power source unit 111 mounted in the power supply unit 110 is carried out, so that the process of identification of the type of power source unit 111 mounted in the power supply unit 110 can be carried out at the necessary and appropriate time.

The control unit 116 determines whether, at step S300, the type of power source unit 111 mounted in the power supply unit 110 could be identified in step S200.

The control unit 116 proceeds to step S301 if it was not possible to identify the type of power source unit 111 mounted in the power supply unit 110 at step S200 (step S300: NO). The control unit 116 may not be able to identify the type of power source unit 111 mounted in the power supply unit 110 at step S200 if, for example, a power source unit that is not compatible with the inhalation device 100 is mounted in the power supply unit 110, or if an identification unit fails to detect the type of power source unit 111 mounted in the power supply unit 110 in the identification flow.

At step S301, the control unit 116 transitions the inhalation device 100 to an unusable state and returns to step S100. For example, the control unit 116 prevents transition to the standby mode even if the user has performed an operation to transition to the standby mode. Also, for example, the control unit 116 prevents the supply of power to the heating unit 121 even if it detects an inhalation operation by the user.

This improves safety as the inhalation device 100 can be disabled if a power source that is not compatible with the inhalation device 100 is mounted in the power supply unit 110, or if a power source compatible with the inhalation device 100 is not correctly mounted in the power supply unit 110, and so on.

On the other hand, if the control unit 116 was able to identify the type of power source unit 111 installed in the power supply unit 110 at step S200 (step S300: YES), the flow proceeds to step S400 and the control unit performs various control value modification processes used when controlling the power source unit 111, in accordance with the type of power source unit 111 installed in the power supply unit 110, and then terminates the series of control operations.

### 6. Determining Whether the Power Source Unit has been Replaced

Next, first to third examples are described as examples of the aspects for determining whether the power source unit 111 has been replaced in step S100 as previously described. Note that whether the power source unit 111 has been replaced may be determined by aspects other than the first to third examples.

### 6-1. First Example of an Aspect for Determining Whether the Power Source Unit has been Replaced

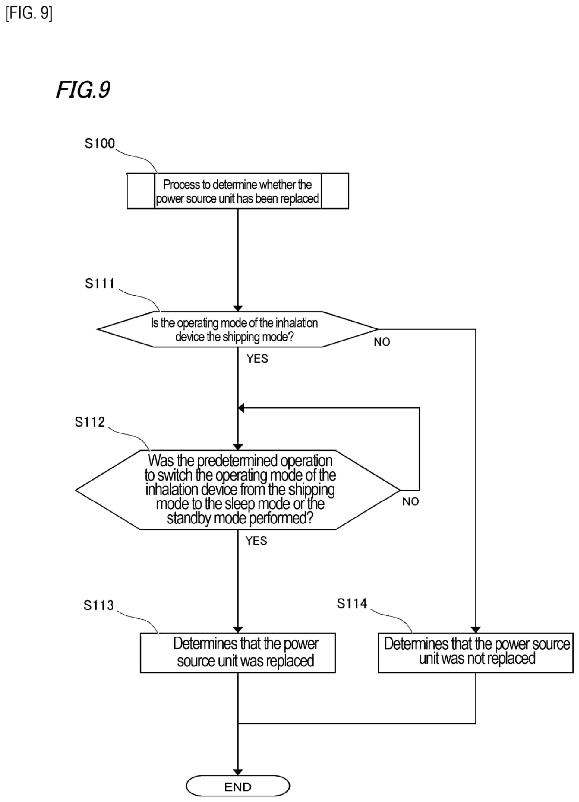

Fig. 9 is a flowchart showing a first example of an aspect for determining whether the power source unit 111 has been replaced.

In this example, when replacing the power source unit 111, the mode in which the user performs the predetermined operation to operate the inhalation device 100 must be switched to the shipping mode, taking into consideration safety aspects, etc. The predetermined operation to switch the operating mode of the inhalation device 100 to the shipping mode is, for example, an operation to press and hold the operation portion 15 continuously for more than a predetermined time period (for example, 5 seconds). Also, for example, the power supply unit 110 of the inhalation device 100 can communicate with a communication terminal such as a smartphone, tablet, or Personal Computer (PC), and the communication terminal and the power supply unit 110 of the inhalation device 100 can cooperate via an application installed on the communication terminal. The predetermined operation to switch the operating mode of the inhalation device 100 to shipping mode may be performed by using the application installed on the communication terminal to switch the operating mode of the inhalation device 100 to shipping mode.

The control unit 116 first of all determines whether or not the operating mode of the inhalation device 100 is the shipping mode (step S111). If the operating mode of the inhalation device 100 is not the shipping mode (step S111: NO), the control unit 116 proceeds to step S114, determines that the power source unit 111 has not been replaced, and finishes determining whether the power source unit 111 has been replaced at step S100.

The control unit 116 proceeds to step S112 if the operating mode of the inhalation device 100 is the shipping mode (step S111: YES).

The user may, after performing a predetermined operation to switch the operating mode of the inhalation device 100 to the shipping mode, replace the power source unit 111 by removing the power source unit 111 from the inhalation device 100 and attaching a new power source unit 111 to the inhalation device 100.

The user then attaches a new power source unit 111 to the inhalation device 100 and performs a predetermined operation to switch the operating mode of the inhalation device 100 from the shipping mode to the sleep mode or the standby mode upon completion of the replacement of the power source unit 111. The predetermined operation for switching the operating mode of the inhalation device 100 from the shipping mode to the sleep mode or the standby mode is, for example, the operation of connecting an external power source 1000 to the external connection terminal of the inhalation device 100.

At step S112, the control unit 116 determines whether a predetermined operation has been performed to switch the operating mode of the inhalation device 100 from the shipping mode to the sleep mode or the standby mode. The control unit 116 is in a standby state until the predetermined operation for switching the operating mode of the inhalation device 100 from the shipping mode to the sleep mode or the standby mode (loop of step S112: NO) is performed.

The control unit 116 proceeds to step S113 after the predetermined operation to switch the operating mode of the inhalation device 100 from the shipping mode to the sleep mode or the standby mode (step S112: YES) is performed, determines that the power source unit 111 has been replaced, and finishes determining whether the power source unit 111 has been replaced at step S100.

This enables determination of whether or not the power source unit 111 has been replaced by means of a simple control.

### 6-2. Second Example of an Aspect for Determining Whether the Power Source Unit has been Replaced

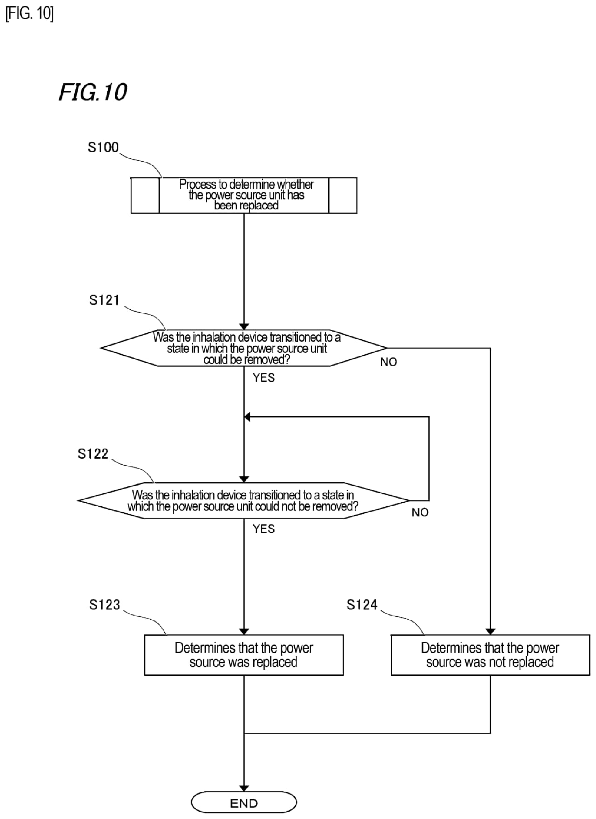

Fig. 10 is a flowchart showing a second example of an aspect for determining whether the power source unit 111 has been replaced.

First, the control unit 116 determines whether the inhalation device 100 has been transitioned to a state in which the power source unit 111 is removable (step S121). For example, in the First Example of an Insertion and Removal Aspect of the Power Source Unit described previously, whether or not the inhalation device 100 has transitioned to the state in which the power source unit 111 can be removed is determined as follows. If the bottom wall portion 21, which can be opened and closed about the hinge portion 21a, is in the open state and the power supply accommodating portion 200 is in the open state, it is determined that the inhalation device 100 has transitioned to a state in which the power source unit 111 can be removed (step S121: YES). If the bottom wall portion 21, which can be opened and closed around the hinge portion 21a, is not in an open state and the power supply accommodating portion 200 is not in an open state, it is determined that the inhalation device 100 has not transitioned to a state in which the power source unit 111 can be removed (Step S121: NO). Also, for example, in the Second Example of an Insertion and Removal Aspect of the Power Source Unit described previously, whether or not the inhalation device 100 has transitioned to the state in which the power source unit 111 can be removed is determined as follows. If the panel 30 is removed from the case 20 and the power supply accommodating portion 200 is in an open state, it is determined that the inhalation device 100 has transitioned to a state in which the power source unit 111 can be removed (step S121: YES). If the panel 30 is not removed from the case 20 and the power supply accommodating portion 200 is not in an open state, it is determined that the inhalation device 100 has not transitioned to a state in which the power source unit 111 can be removed (step S121: NO). Also, for example, in the Third Example of an Insertion and Removal Aspect of the Power Source Unit described previously, whether or not the inhalation device 100 has transitioned to the state in which the power source unit 111 can be removed is determined as follows. If the modularized battery pack 10, which includes the power source unit 111 and the bottom case 202, is removed from the top case 201, it is determined that the inhalation device 100 has transitioned to a state in which the power source unit 111 can be removed (step S121: YES). If the modularized battery pack 10, which includes the power source unit 111 and the bottom case 202, is not removed from the top case 201, it is determined that the inhalation device 100 has not transitioned to a state in which the power source unit 111 can be removed (step S121: NO).

If the inhalation device 100 has not transitioned to the state in which the power source unit 111 can be removed (loop of step S121: NO), the routine proceeds to step S124, the control unit 116 determines that the power source unit 111 has not been replaced, and ends the determination of whether the power source unit 111 has been replaced at step S100.

If the inhalation device 100 has transitioned to the state in which the power source unit 111 can be removed (step S121: YES), the control unit 116 proceeds to step S122.

After transitioning to the state in which the power source unit 111 can be removed, the user replaces the power source unit 111 by removing the power source unit 111 from the inhalation device 100 and attaching a new power source unit 111 to the inhalation device 100.

Then, the user attaches the new power source unit 111 to the inhalation device 100, and after replacement of the power source unit 111 is complete, transitions the inhalation device 100 to a state where the power source unit 111 cannot be removed. For example, in the First Example of an Insertion and Removal Aspect of the Power Source Unit described previously, the state in which the power source unit 111 cannot be removed is the state in which the bottom wall portion 21, which can be opened and closed about the hinge portion 21a, is in the closed state, and the power supply accommodating portion 200 is in the closed state. Also, for example, in the Second Example of an Insertion and Removal Aspect of the Power Source Unit described previously, the state in which the power source unit 111 cannot be removed is the state in which the panel 30 is attached to the case 20, and the power supply accommodating portion 200 is in the closed state. Also, for example, in the Third Example of an Insertion and Removal Aspect of the Power Source Unit described previously, the state in which the power source unit 111 cannot be removed is the state in which the modularized battery pack 10, which includes the power source unit 111 and the bottom case 202, is mounted on the top case 201.

At step S122, the control unit 116 determines whether the inhalation device 100 has transitioned to the state in which the power source unit 111 cannot be removed. If the inhalation device 100 has not transitioned to the state in which the power source unit 111 cannot be removed (loop of step S122: NO), the control unit 116 enters a standby state until the inhalation device 100 transitions to the state where the power source unit 111 cannot be removed.

If the inhalation device 100 has transitioned to the state where the power source unit 111 cannot be removed (step S122: YES), the routine proceeds to step S123, and the control unit 116 determines that the power source unit 111 has been replaced (step S100:YES), and finishes determining whether the power source unit 111 has been replaced at step S100.

This enables determination of whether or not the power source unit 111 has been replaced by means of a simple control.

### 7. Method of Identifying the Type of Power Source Unit

Next, first to third examples are described as examples of the method of identifying the type of power source unit 111 mounted in the power supply unit 110 in the aforementioned step S200. Note that identification of the type of power source unit 111 mounted in the power supply unit 110 may be performed by a method other than the first to third examples. In this way, the type of power source unit 111 mounted in the power supply unit 110 can be identified by the control unit 116 performing the identification process to identify the type of power source unit 111 installed in the power supply unit 110

### 7-1. First Example of a Method of Identifying the Type of Power Source Unit Mounted in the Power Supply Unit

In the present example, the terminal-to-terminal voltage of the power source unit 111 mounted in the power supply unit 110 and the current flowing between the terminals of the power source unit 111 are measured, and identification of the type of power source unit 111 mounted in the power supply unit 110 is performed based on the measured terminal-to-terminal voltage and current values.

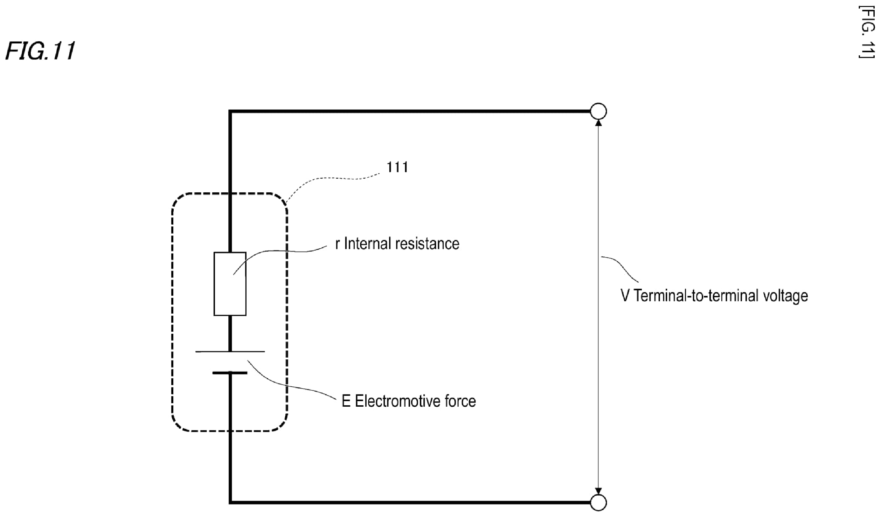

As shown in Fig. 11, the power source unit 111 generates an electromotive force E [V] and has an internal resistance r [Ω]. The internal resistance r [Ω] of the power source unit 111 depends on the type of power source unit 111. Also, the type of power source unit 111 mounted in the power supply unit 110 is identified by obtaining the value of the internal resistance r [Ω] of the power source unit 111 mounted in the power supply unit 110.

In the present example, the terminal-to-terminal voltage of the power source unit 111 mounted in the power supply unit 110 and the current flowing between the terminals of power source unit 111 are measured. According to the circuit diagram of Fig. 11, assuming the terminal-to-terminal voltage of the power source unit 111 is V [V] and the current flowing between the terminals of the power source unit 111 is I [A], the following equation (1) holds: $E \left[V\right] = r \left[Ω\right] \times I \left[A\right] + V \left[V\right]$ (1)

Equation (1) is transformed into the following equation (2). $V \left[V\right] = E \left[V\right] - r \left[Ω\right] \times I \left[A\right]$ (2)

The electromotive force E [V] of the power source unit 111 can be obtained from the measured value of the terminal-to-terminal voltage V [V] when the value of the current I [A] is zero. That is, the electromotive force E [V] of the power source unit 111 can be obtained by measuring the terminal-to-terminal voltage V [V] in an open circuit. The value of the internal resistance r [Ω] of the power source unit 111 can also be obtained by substituting the values of the terminal-to-terminal voltage V [V] and the current I [A] obtained from measurements into equation (2).

The memory unit 114 stores an identification table corresponding to the type of power source unit 111 and the value of the internal resistance r [Ω].

The control unit 116 refers to the identification table stored in the memory unit 114, and identifies the type of power source unit 111 corresponding to the value of the internal resistance r [Ω] obtained as the type of power source unit 111 mounted in the power supply unit 110.

This enables low cost and simple identification of the type of power source unit 111 without the need to provide a separate member or the like to identify the type of power source unit 111.

### 7-2. Second Example of a Method for Identifying the Type of Power Source Unit Mounted in the Power Supply Unit

In the present example, the power source unit 111 is provided with identification resistors R2 of different values for each type of power source unit 111. When the power source unit 111 is supplying power, an identification voltage V2 is applied to the identification resistor R2. The power source unit 111 is configured such that the identification voltage V2 is a predetermined voltage for each type of power source unit 111. Then, identification of the type of power source unit 111 mounted in the power supply unit 110 is based on the identification voltage V2.

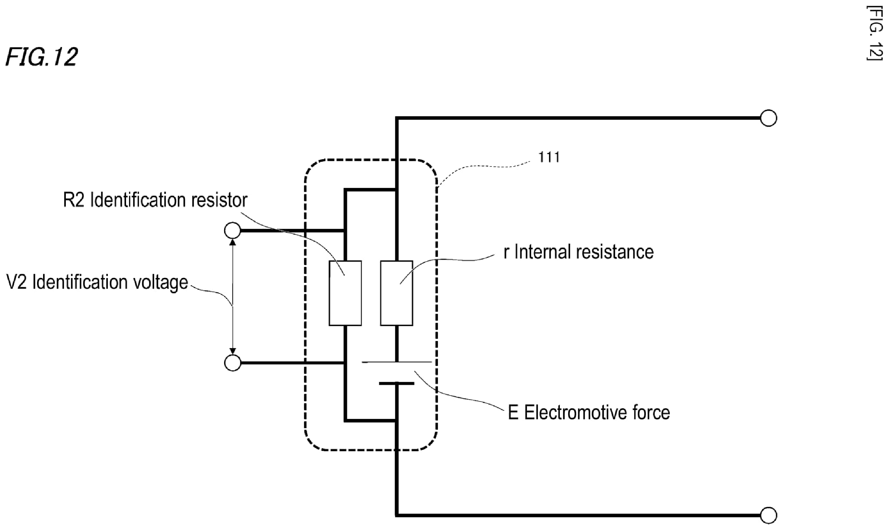

As shown in Fig. 12, the power source unit 111 generates an electromotive force E [V] and has an internal resistance r [Ω]. Furthermore, the power source unit 111 is provided with an identification resistor R2 of different value for each type of power source unit 111, and when the power source unit 111 is supplying power, an identification voltage V2, which is a predetermined voltage for each type of power source unit 111, is applied to the identification resistor R2. The type of power source unit 111 mounted in the power supply unit 110 is then identified by obtaining the value of the identification voltage V2 of the power source unit 111 mounted in the power supply unit 110.

For example, a first type of power source unit 111 is provided with an identification resistance R2 in which 1 [V] is applied as the identification voltage V2, and the second type of power source unit 111 is provided with an identification resistance R2 in which 2 [V] is applied as the identification voltage V2.

This enables more accurate identification of the type of power source unit 111.

### 7-3. Third Example of a Method for Identifying the Type of Power Source Unit Mounted in the Power Supply Unit

In the present example, an identification member 111f provided with an identifier capable of identifying the type of power source unit 111 is attached to the power source unit 111. The identification member 111f provided with the identifier may be, for example, a barcode for each type of power source unit 111, a two-dimensional code for each type of power source unit 111, an Integrated Circuit (IC) tag with information on the type of power source unit 111, a Radio Frequency Identification (RFID) tag with information on the type of power source unit 111 written thereon, and so on.

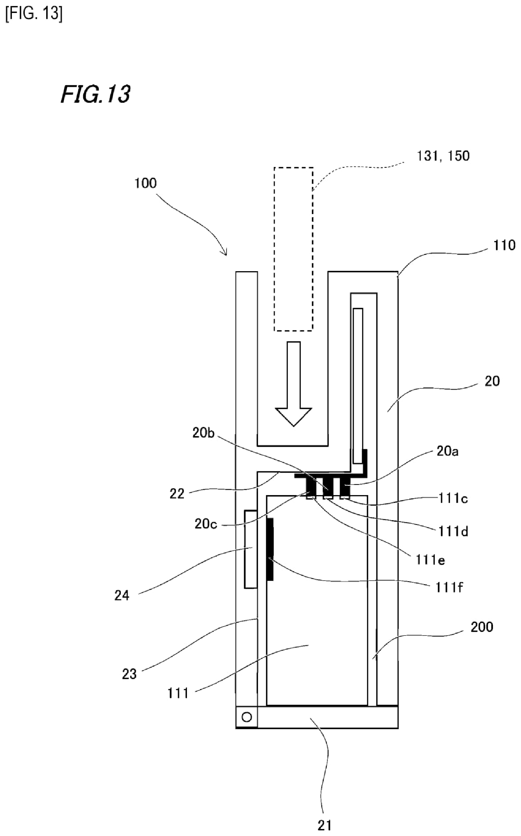

As shown in Fig. 13, in the present example, the identification member 111f is attached to a side surface of the power source unit 111. A reading sensor 24 is then provided at a position opposite the identifier of the identification member 111f when the power source unit 111 is correctly mounted in the power supply unit 110. The reading sensor 24 may for example be provided at the side wall portion 23 of the power supply accommodating portion 200, or may be provided in the top case 201. The reading sensor 24 reads the identifier of the identification member 111f mounted on the power source unit 111.

Then, identification of the type of power source unit 111 mounted in the power supply unit 110 is based on the information from the identifier read by the reading sensor 24.

This enables more accurate identification of the type of power source unit 111, as well as enabling more information to be read by the reading sensor 24 from the identifier of the identification member 111f.

In this case, if the identifier provided on the identification member 111f and the reading sensor 24 are not correctly aligned, it may not be possible for the identifier of the identification member 111f mounted on the power source unit 111 to be read by the reading sensor 24.

Therefore, in the power source unit 111, the positive electrode terminal 111c, the negative electrode terminal 111d, and the temperature terminal 111e are preferably provided on the same predetermined surface constituting the outer surface of the power source unit 111. In this case, when mounting the power source unit 111 in the power supply unit 110, the positive electrode terminal 111c, the negative electrode terminal 111d, and the temperature terminal 111e are electrically connected to the positive terminal connection 20a, the negative terminal connection 20b, and the temperature terminal connection 20c, respectively, by pressing in of the power source unit 111 in a predetermined direction relative to the case 20. Also, when the power source unit 111 is mounted in the power supply unit 110, it is aligned by pressing in in a predetermined direction relative to the case 20, so that the identifier provided on the identification member 111f and the reading sensor 24 are more easily aligned correctly.

In this way, the positive electrode terminal 111c, the negative electrode terminal 111d, and the temperature terminal 111e are provided on the same predetermined surface that constitutes the outer surface of the power source unit 111. This ensures that the positive electrode terminal 111c, the negative electrode terminal 111d, and temperature terminal 111e are reliably electrically connected to the positive terminal connection 20a, the negative terminal connection 20b, and the temperature terminal connection 20c, and that the identifier provided on the identification member 111f and the reading sensor 24 are correctly aligned.

In addition, the outer surface of the power source unit 111 may be composed of a plurality of surfaces facing upward, downward, forward, backward, left, and right, and the shape of the power supply accommodating portion 200 may be configured to have a surface shape that faces this plurality of surfaces of the power source unit 111.

This prevents the power source unit 111 from shifting position in the power supply accommodating portion 200, ensuring that the positive electrode terminal 111c, the negative electrode terminal 111d, and temperature terminal 111e are reliably electrically connected to the positive terminal connection 20a, the negative terminal connection 20b, and the temperature terminal connection 20c, and that the identifier provided on the identification member 111f and the reading sensor 24 are correctly aligned.

### 7-4. Fourth Example of a Method for Identifying the Type of Power Source Unit Mounted in the Power Supply Unit

In the present example, the power supply unit 110 of the inhalation device 100 is enabled to communicate with a communication terminal such as a smartphone, a tablet terminal, or a personal computer (PC), and the communication terminal and the power supply unit 110 of the inhalation device 100 are enabled to cooperate via an application installed on the communication terminal.

Then, using the application installed on the communication terminal, the user inputs information about the power source unit 111 attached to the power supply unit 110 of the inhalation device 100. The communication terminal transmits the information about the power source unit 111 input by the user to the power supply unit 110, and the power source unit 110 identifies the type of power source unit 111 attached to the power supply unit 110 based on the information about the power source unit 111 received from the communication terminal.

### 1-8. Configuration Example of the Part Relating to Charging and Discharging of the Power Source Unit

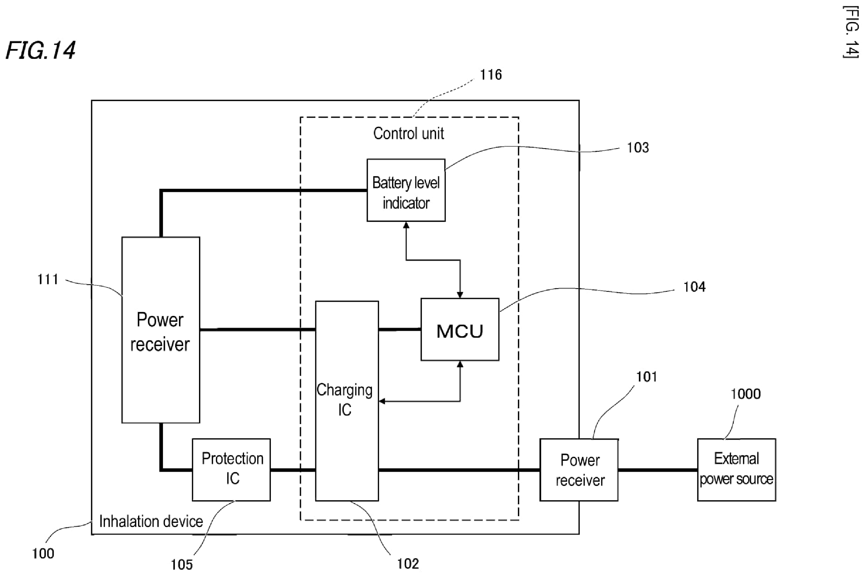

Fig. 14 is a schematic diagram schematically showing a configuration example of a part of the inhalation device 100 relating to charging and discharging of the power source unit 111. In Fig. 14, the thick solid lines denote electrical wiring, and the solid line arrows denote control signals or detection signals.

As shown in Fig. 14, in addition to the power source unit 111, the inhalation device 100 further comprises: a power receiver 101, a charging IC 102, a battery level indicator 103, an MCU 104, and a protection IC 105. The control unit 116, previously described, includes, for example, the charging IC 102, the battery level indicator 103, and the MCU 104 shown in Fig. 14, and so on.

The power source unit 111 is configured to be capable of being charged by means of power received from the external power source 1000. Here, the external power source 1000 is a device configured to be capable of outputting predetermined power. Also, the predetermined power is power that the inhalation device 100 is capable of receiving in terms of hardware, and may be, for example, DC power having a predetermined voltage (for example, 5 to 20 [V]). The external power source 1000 may be an alternating current (AC) adapter configured to be capable of outputting the predetermined power, for example. Furthermore, the external power source 1000 is not limited to an AC adapter, and may be, for example, a portable charger (also referred to as a mobile battery), a personal computer (PC), a smartphone, a tablet terminal, or the like.

The power source unit 111 is configured to be capable of supplying stored power to each component of the inhalation device 100, such as the charging IC 102, the battery level indicator 103, the MCU 104, and the heating unit 121 (not shown in Fig. 14). Note that Fig. 14 shows an example in which power is supplied directly from the power source unit 111 to the MCU 104, but this is not a limitation. For example, power may also be supplied from the power source unit 111 to the MCU 104 via the charging IC 102.

The power receiver 101 is configured to be capable of receiving power output from the external power source 1000. As an example, the power receiver 101 may be an external connection terminal provided in the case 20 that can be electrically connected to the external power source 1000. The external connection terminal is, for example, a receptacle to which a connector such as a Universal Serial Bus (USB) or the like can be connected. Furthermore, the power receiver 101 may be a power-receiving coil, or similar, which is configured to be capable of contactlessly receiving power delivered from the external power source 1000. In this case, the method of contactless power transfer (WPT: wireless power transfer) may employ electromagnetic induction, magnetic resonance, or a combination of electromagnetic induction and magnetic resonance.

The charging IC 102 is an integrated circuit (IC) which is electrically provided between the power receiver 101 and the power source unit 111, and is configured to be capable of controlling charging of the power source unit 111 with the power received from the external power source 1000 via the power receiver 101.

As an example, when there is a request to start charging from a user, the charging IC 102 starts charging of the power source unit 111 with the power received from the external power source 1000. Here, the request to start charging may be the establishment of an electrical connection between the inhalation device 100 and the external power source 1000, for example. Furthermore, the request to start charging may further comprise the performance of a predetermined operation once the electrical connection between the inhalation device 100 and the external power source 1000 has been established. Pressing a predetermined operation button provided on the inhalation device 100 is an example of this operation. Furthermore, this operation is not limited to a direct operation on the inhalation device 100, and it may equally be an operation on another device such as a smartphone that is capable of communicating with the inhalation device 100, for example.

The charging IC 102 controls the power to charge the power source unit 111 when charging the power source unit 111. A constant current charging current value Icc [A], a constant voltage charging voltage value Vcv [V], a charging switching voltage Vc [V], and an end-of-charging voltage Ve [V] are set in the charging IC 102 and stored in the memory. The charging IC 102 controls the power used to charge the power source unit 111, based on the constant current charging current value Icc [A], the constant voltage charging voltage value Vcv [V], the charging switching voltage Vc [V], and the end-of-charging voltage Ve [V] stored in the memory. Details of the charging control of the power source unit 111 by the charging IC 102 are described later.

The battery level indicator 103 is an integrated circuit (IC) that measures the state of charge (SOC) of the power source unit 111. The battery level indicator 103 periodically measures the open circuit voltage between the terminals of the power source unit 111 and calculates the remaining charge of the power source unit 111 based on the measured open circuit voltage of the power source unit 111.

The battery level indicator 103 uses a current sensing resistor to accumulate the amount of current that flows into the power source unit 111 during charging, and measures the amount of current that flows out of the power source unit 111 during discharge. Based on the amount of current that flows into the power source unit 111 during charging and the amount of current that flows out of the power source unit 111 during discharge, the battery level indicator 103 periodically calculates the remaining charge of the power source unit 111, and stores it in the memory of the battery level indicator 103. Note that the battery level indicator 103 may also store measurement data such as the discharge properties (under no load) and temperature properties of the power source unit 111 in memory, and periodically measure the voltage, current, and temperature of the power source unit 111 while it is operating to calculate the impedance of the power source unit 111. Based on the calculated impedance of the power source unit 111, the remaining charge of the power source unit 111 may be calculated periodically.

Here, a discrepancy may occur between the remaining charge of the power source unit 111 calculated based on the open circuit voltage of the power source unit 111 and the actual remaining charge of the power source unit 111 due to ageing, and so on, of the power source unit 111.

Accordingly, when the operating mode of the inhalation device 100 is in the sleep mode, the battery level indicator 103 measures the open circuit voltage of the power source unit 111 and calculates the remaining charge of the power source unit 111 based on the open circuit voltage. The battery level indicator 103 then calculates a correction value from the difference between the remaining charge of the power source unit 111 calculated based on the open circuit voltage and the remaining charge of the power source unit 111 previously stored in the memory of the battery level indicator 103. Calculation of the correction value is performed periodically and the correction value is over-written and stored in the memory of the battery level indicator 103.

The battery level indicator 103 then calculates a corrected charge level of the the power source unit 111, which is corrected to be a more accurate charge level, based on the remaining charge level of the power source unit 111 calculated based on the amount of current that flowed into the the power source unit 111 during charging and the amount of current that flowed out of the the power source unit 111 during discharge, and the correction value is stored in the memory of the battery level indicator 103. The calculated corrected charge remaining in the power source unit 111 may be notified to the notification unit 113.

Also, when a new power source unit 111 is mounted in the power supply unit 110, and predetermined operations are performed, such as the user operating the operation portion 15 or connecting an external power source 1000 to the power receiver 101, and the operating mode of the suction device 100 switches from shipping mode to standby mode or sleep mode, the battery level meter 103 measures the open-circuit voltage of the the power source unit 111 and calculates the remaining charge of the the power source unit 111 based on the open-circuit voltage. The battery level indicator 103 then calculates the remaining charge in the power source unit 111, starting from this open circuit voltage, and the amount of current flowing into the power source unit 111 when charging and the amount of current flowing out of the power source unit 111 when discharge.

In this case, if the battery level meter 103 corrects the remaining charge of the the power source unit 111, which is calculated based on the amount of current that flowed into the the power source unit 111 during charging and the amount of current that flowed out of the the power source unit 111 during discharge, using the correction value stored in memory when the the power source unit 111 was installed before replacement, the corrected remaining charge of the power source unit 111 installed in the power supply unit 110 after replacement will be a value that deviates from the actual remaining charge of the the power source unit 111.

Therefore, when the MCU 104 determines that the power source unit 111 mounted in the power supply unit 110 has been replaced, the battery level indicator 103 erases the remaining charge of the power source unit 111 stored in the memory calculated based on the amount of current flowing into the power source unit 111 when charging and the amount of current flowing out of the power source unit 111 when discharging, and the correction value stored in the memory, in accordance with instructions from the MCU 104. Then, after it has been determined that the power source unit 111 mounted in the power supply unit 110 has been replaced, the remaining charge of the power source unit 111 calculated based on the amount of current flowing into the power source unit 111 at the time of charging and the amount of current flowing out of the power source unit 111 at the time of discharging, and the correction value calculated after it has been determined that the power source unit 111 mounted in the power supply unit 110 has been replaced, are newly stored in the memory.

The battery level indicator 103 is set with an upper limit current Imax [A] for determining whether the power discharged from the power source unit 111 is an overcurrent, and an upper limit voltage Vmax [V] for determining whether the power discharged from the power source unit 111 is an overvoltage, which are stored in the memory. The battery level indicator 103 interrupts discharging from the power source unit 111 when the power discharged from the power source unit 111 exceeds the upper limit current Imax [A] and when the power discharged from the power source unit 111 exceeds the upper limit voltage Vmax [V].

Furthermore, the battery level indicator 103 has a nominal voltage Vn [V] of the power source unit 111 and a charge capacity CC [Ah] set and stored in the memory. The nominal voltage Vn [V] is a voltage value defined as an indication of the terminal-to-terminal voltage obtained when the power source unit 111 is used under normal conditions. The charge capacity CC [Ah] is the maximum amount of electrical charge released by the power source unit 111 from a fully charged state.

The MCU 104 is a computer that is mainly configured by a processor for implementing various types of arithmetic processing, and performs integrated control of the inhalation device 100 as a whole in accordance with a pre-prepared program. The control targets controlled by the MCU 104 include the charging IC 102, the battery level indicator 103, and so on.

The MCU 104 has a threshold voltage Vth [V] set and stored in the memory. The threshold voltage Vth [V] is a voltage value for determining whether the amount of power required to complete heating of one flavor source 131 or stick-type substrate 150 is left as the remaining charge of the power source unit 111. The threshold voltage Vth [V] is used in the flow to determine the capacity to control heating of the inhalation device 100 described later.

The protection IC 105 is an integrated circuit (IC) that protects the power source unit 111 from overcharging, over-discharging, overvoltage, overcurrent, short circuits, and so on. The protection IC 105 operates independently of the control unit 116.

The protection IC 105 has a forced stop current Ifs [A] and a forced stop voltage Vfs [V] set and stored in the memory. The forced stop current Ifs [A] is set to a value greater than the upper limit current Imax [A] set in the battery level indicator 103. The protection IC 105 forces discharging from the power source unit 111 to stop when the current of the power discharged from the power source unit 111 is greater than or equal to the forced stop current Ifs [A]. The forced stop voltage Vfs [V] is set to a value greater than the upper limit voltage Vmax [V] set in the battery level indicator 103. The protection IC 105 forces discharge from the power source unit 111 to stop when the voltage of the power discharged from the power source unit 111 is greater than or equal to the forced stop voltage Vfs [V].

In this way, the power source unit 111 is doubly protected from overcurrent and overvoltage by the battery level indicator 103 and the protection IC 105. Under normal conditions, the power discharged from the power source unit 111 is controlled by the battery level indicator 103 to be less than or equal to the upper limit current Imax [A] and less than or equal to the upper limit voltage Vmax [V]. Also, in the event of a fault in the battery level indicator 103, the power discharged from the power source unit 111 is controlled by the protection IC 105 to be less than or equal to the forced stop current Ifs [A] and less than or equal to the forced stop voltage Vfs [V].

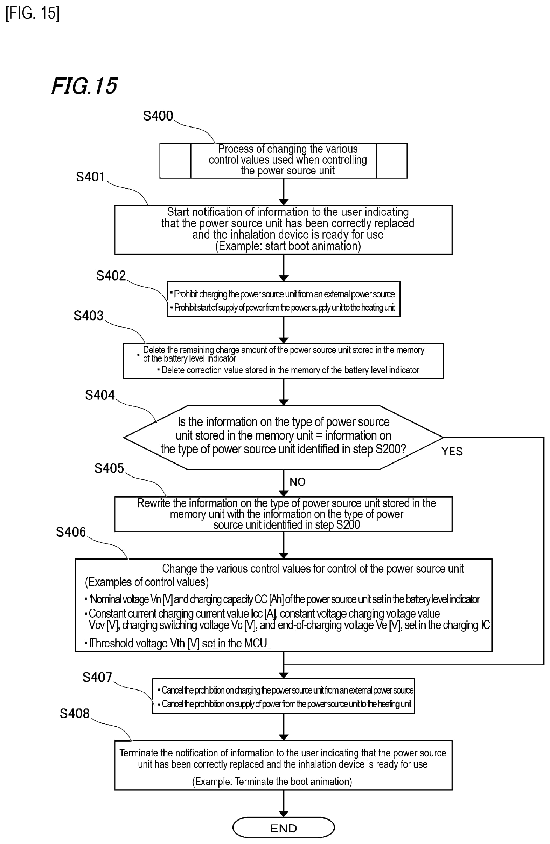

9.Changing the Various Control Values Used to Control the Power Source Unit Next, the process of changing the various control values used to control the power source unit 111, carried out at step S400, is described with reference to Fig. 15.

In step S200, the control unit 116 was able to identify the type of power source unit 111 mounted in the power supply unit 110 (step S300: YES), and triggered by this, in step S400 the control unit executes the process of changing various control values in the control of the power source unit 111.

The control unit 116 first proceeds to step S401, where it controls the notification unit 113 to begin notifying the user of information indicating that the power source unit 111 has been correctly replaced and the inhalation device 100 is ready for use. If the notification portion 113 is a display device displaying an image, for example, it starts a boot animation.

The control unit 116 then proceeds to step S402 where it controls the charging IC 102 to prevent charging of the power source unit 111 from the external power source 1000, and controls the MCU 104 to prevent the supply of power from the power source unit 111 to the heating unit 121. The routine then advances to step S403.

At step S403, the control unit 116 erases the remaining charge of the power source unit 111 stored in the memory of the battery level indicator 103 that was calculated based on the amount of current flowing into the power source unit 111 when charging and the amount of current flowing out of the power source unit 111 when discharging, and the correction value stored in the memory of the battery level indicator 103.

This can prevent the power source unit 111 mounted in the power supply unit 110 after replacement from being controlled with a correction value corresponding to the power source unit 111 mounted in the power supply unit 110 before replacement, so that the power source unit 111 mounted in the power supply unit 110 after replacement can be more appropriately controlled.

The control unit 116 proceeds to step S404, where it compares the information on the type of power source unit 111 stored in the memory unit 114 as the type of power source unit 111 installed in the power supply unit 110 with the information on the type of power source unit 111 identified in step S200, and determines whether or not they are the same.

The control unit 116 does not change the various control values in the control of the power source unit 111 if, at step S404, the information on the type of power source unit 111 stored in the memory unit 114 as the type of power source unit 111 mounted in the power supply unit 110 and the information on the type of power source unit 111 identified in step S200 are identical (step S404: YES), and proceeds to step S407.

The control unit 116 proceeds to step S405 if, at step S404, the information on the type of power source unit 111 stored in the memory unit 114 as the type of power source unit 111 mounted in the power supply unit 110 is different from the information on the type of power source unit 111 identified at step S200 (step S404: NO).

At step S405, the control unit 116 rewrites the information on the type of power source unit 111 stored in the memory unit 114 as the type of power source unit 111 mounted in the power supply unit 110 to the type of information on the power source unit 111 identified at step S200. The routine then advances to step S406.

At step S406, the control unit 116 modifies various control values for control of the power source unit 111 based on the information regarding the power source unit 111 stored in the memory unit 114.

Specifically, the control unit 116 changes the nominal voltage Vn [V] and the charge capacity CC [Ah] of the power source unit 111 set in the battery level indicator 103, the constant current charging current value Icc [A], the constant voltage charging voltage value Vcv [V], the charging switching voltage Vc [V] and the end-of-charging voltage Ve [V] set in the charging IC 102, and the threshold voltage Vth [V] set in the MCU 104.

The memory unit 114 stores a control value table that associates a plurality of types of power source unit 111 with the nominal voltage Vn [V], the charging capacity CC [Ah], the constant current charging current value Icc [A], the constant voltage charging voltage value Vcv [V], the charging switching voltage Vc [V], the end-of-charging voltage Ve [V], and the threshold voltage Vth [V] for the corresponding type of power source unit 111.

In step S406, the control unit 116 refers to the information on the type of power source unit 111 stored in the memory unit 114 and the control value table, and retrieves the nominal voltage Vn [V], the charging capacity CC [Ah], the constant current charging current value Icc [A], the constant voltage charging voltage value Vcv [V], and the charging switching voltage Vc [V], the end-of-charging voltage Ve [V], and the threshold voltage Vth [V]. Then, the control unit 116 changes the nominal voltage Vn [V] and charging capacity CC [Ah] of the power source unit 111 set in the battery level indicator 103, the constant current charging current value Icc [A], the constant voltage charging voltage value Vcv [V], the charging switching voltage Vc [V], and the end-of-charging voltage Ve [V] set in the charging IC 102, and the threshold voltage Vth [V] set in the MCU 104 to the retrieved nominal voltage Vn [V], the charging capacity CC [Ah], the constant current charging current value Icc [A], the constant voltage charging voltage value Vcv [V], the charging switching voltage Vc [V], the end-of-charging voltage Ve [V], and the threshold voltage Vth [V].

This enables the appropriate nominal voltage Vn [V], charging capacity CC [Ah], constant current charging current value Icc [A], constant voltage charging voltage value Vcv [V], charging switching voltage Vc [V], end-of-charging voltage Ve [V], and threshold voltage Vth [V] to be set in the battery level indicator 103, depending on the type of power source unit 111.

On the other hand, the upper limit current Imax [A] and the upper limit voltage Vmax [V] set in the battery level indicator 103 do not change. Note that the protection IC 105 operates independently of the control unit 116, and the forced stop current Ifs [A] and forced stop voltage Vfs [V] set in the protection IC 105 are not changed by the control unit 116.

Even if the upper limit current Imax [A] and upper limit voltage Vmax [V] set in the battery level indicator 103 are not changed, the power discharged from the power source unit 111 is controlled by the protection IC 105, which operates independently of the control unit 116, so the power discharged is less than or equal to the forced stop current Ifs [A] and less than or equal to the forced stop voltage Vfs [V]. Therefore, the power discharged from the power source unit 111 can be safely controlled even if the upper limit current Imax [A] and upper limit voltage Vmax [V] set on the battery level indicator 103 are not changed. This reduces the number of times the upper limit current Imax [A] and upper limit voltage Vmax [V] are written to the memory of the battery level indicator 103 by not changing the upper limit current Imax [A] and upper limit voltage Vmax [V] set in the battery level indicator 103, thereby extending the lifespan of the battery level indicator 103.

The control unit 116 proceeds to step S407 upon completion of changing various control values for the control of the power source unit 111 at step S406.

In step S407, the control unit 116 controls the charging IC 102 to release the prohibition on charging the power source unit 111 from the external power supply 1000 that was imposed in step S402. The control unit 116 also controls the MCU 104 to release the prohibition on supplying power from the power source unit 111 to the heating unit 121 that was imposed in step S402. The routine then advances to step S408.

At step S408, the control unit 116 controls the notification unit 113 to end the notification to the user that the power source unit 111 has been correctly replaced and that the inhalation device 100 is ready for use. If the notification unit 113 is a display device displaying an image, for example, it ends the boot animation. The process of changing various control values in the control of the power source unit 111 is then finished.

In this way, at least one of the plurality of control values used in the control of the power source unit 111 is changed based on the type of power source unit 111 and at least one of the plurality of control values used in the control of the power source unit 111 is not changed based on the type of the power source unit 111.

This enables the power source unit 111 to be controlled appropriately according to the type of power source unit 111, and since the rewriting of the control values can be reduced to the minimum necessary, the load on the control unit 116 can be reduced and the life of the control unit 116 can be prolonged.

Also, the time that the inhalation device 100 is not available for use due to the replacement of the power source unit 111 can be reduced because changes to the various control values used to control the power source unit 111 are carried out between the start of the notification to the user that the power source unit 111 has been correctly replaced and that the inhalation device 100 is ready for use and the end of the notification.

Also, the safety of the inhalation device 100 is improved because charging and discharging of the power source unit 111 is prevented when the various control values used for controlling the power source unit 111 are changed.

While steps S401 to S408 are being executed, the control unit 116 monitors whether the inhalation device 100 has transitioned to a state where the power source unit 111 can be removed. If the inhalation device 100 has transitioned to a state where the power supply unit 111 can be removed, the control unit 116 may temporarily suspend the execution of steps S401 to S408. If it is subsequently detected that the inhalation device 100 has transitioned to a state where the power source unit 111 cannot be removed, execution of step S401 to step S408 may be resumed. If the inhalation device 100 transitions to a state where the power source unit 111 can be removed while step S406 is being executed, in other words, while various control values for the control of the power source unit 111 are being changed, the control unit 116 may store both the control values that have been changed and the control values that have not been changed, and when it is detected that the inhalation device 100 has transitioned to the state where the power source unit 111 cannot be removed and the execution of steps S401 to S408 is resumed, the control unit 116 may change only the control values for which the change has not been completed. Also, if the inhalation device 100 transitions to the state where the power source unit 111 can be removed while step S406 is being executed, in other words, while various control values for the control of the power source unit 111 are being changed, the control unit 116 may detect that the inhalation device 100 has transitioned to the state where the power source unit 111 cannot be removed, and when the execution of steps S401 to S408 is resumed, the control unit may change all the control values that were to be changed again.

This prevents the power source unit 111 from being removed during changes of the various control values used to control the power source unit 111, so it is possible to prevent a fault in the inhalation device 100.

Note that in this embodiment, the process of changing various control values for the control of the power source unit 111 in step S400 is performed when it is possible to identify the type of power source unit 111 mounted in the power supply unit 110 in step S200 (step S300: YES). However, the process of changing various control valuesfor the control of the power source unit 111 may also be performed when the user initiates a heating start operation or when the user requests the start of charging.

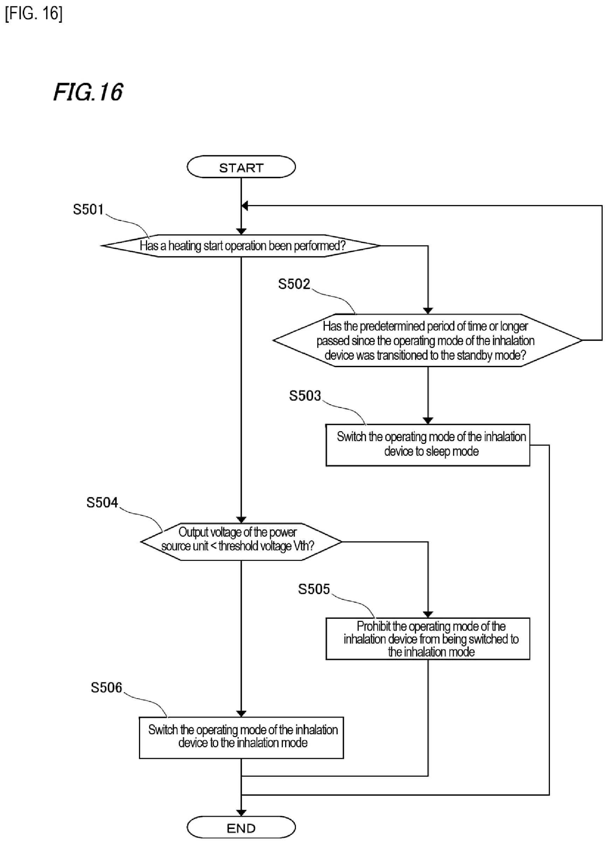

10. Flow to Determine Whether Heating can be Controlled in the Inhalation Device Next, a flow to determine whether heating can be controlled in the inhalation device 100 by determining whether heating is controlled in the inhalation device 100 is described with reference to Fig. 16.

The control unit 116 determines whether a heating start operation has been performed on the inhalation device 100 by the user when the operating mode of the inhalation device 100 is in the standby mode (step S501). If no heating start operation has been performed by the user (step S501: NO), the routine proceeds to step S502 to determine whether the elapsed time since the operating mode of the inhalation device 100 transitioned to the standby mode is greater than or equal to a predetermined time. If the elapsed time since the operating mode of the inhalation device 100 has transitioned to the standby mode is not more than the predetermined time (step S502: NO), the routine returns to step S501 and waits for a heating start operation to be performed by the user. If the elapsed time since the operating mode of the inhalation device 100 has transitioned to the standby mode is greater than or equal to the predetermined time (step S502: YES), the routine proceeds to step S503 to switch the operating mode of the inhalation device 100 to the sleep mode and ends the series of controls.

The control unit 116 proceeds to step S504 when a heating start operation is performed by the user (step S501: YES) when the operating mode of the inhalation device 100 is in the standby mode.

At step S504 the control unit 116 determines whether the amount of power required to complete heating of one flavor source 131 or stick-type substrate 150 remains as the remaining charge of the power source unit 111.

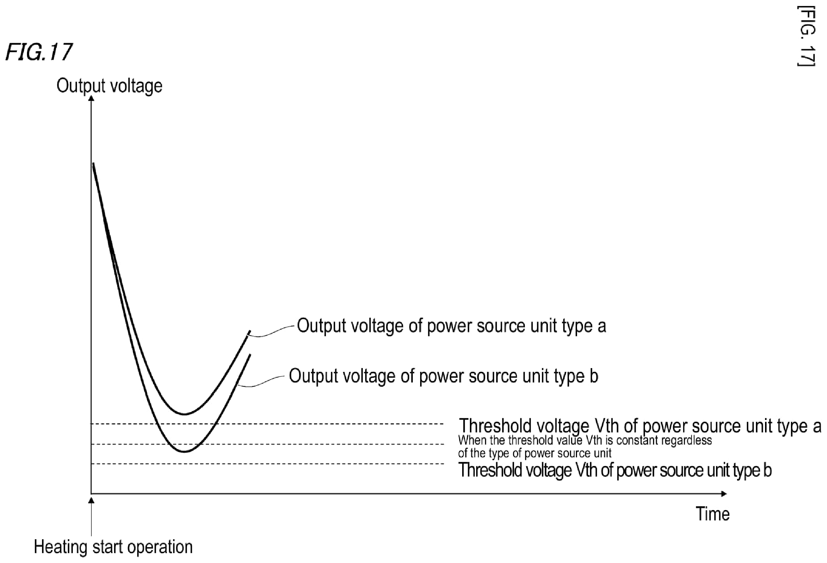

In particular, referring also to Fig. 17, the control unit 116 provides a short-term power supply to the heating unit 121 at step S504, and determines whether the output voltage of the power source unit 111 has fallen below the threshold voltage Vth [V] stored in the memory. At step S504, if the output voltage of the power source unit 111 falls below the threshold voltage Vth [V] (step S504: YES), the control unit 116 determines that the amount of power required to complete heating of one flavor source 131 or stick-type substrate 150 does not remain as the remaining charge of the power source unit 111 and the heating control cannot be performed, determines that heating control cannot be performed and prohibits switching the operating mode to inhalation mode (step S505), and terminates the series of controls. As a result, the control unit 116 cannot perform heating control of the heating unit 121.

At step S504, if the output voltage of the power source unit 111 does not fall below the threshold voltage Vth [V] (step S504: NO), the control unit 116 determines that the amount of power required to complete heating of one flavor source 131 or stick-type substrate 150 remains as the remaining charge of the power source unit 111 and that heating control is feasible, and switches the operating mode to the inhalation mode (step S506), and ends the series of controls. The control unit 116 then carries out heating control of the heating unit 121 when the operating mode is switched to the inhalation mode.

Here, for example, it is assumed that there is a power source unit 111 of type a and a power source unit 111 of type b, and the value of the internal resistance is greater for the power source unit 111 of type b than for type a. In this case, if the remaining charge of each is the same, the voltage drop that occurs when the heating unit 121 is powered for a short period of time will be greater for the power source unit 111 of type b than for the power source unit 111 of type a.

Therefore, regardless of the type of power source unit 111, when the threshold voltage Vth [V] is set to a constant value, it may occur that the power source unit 111 of type b is determined to be incapable of heating, even though the amount of remaining charge necessary to complete heating of one flavor source 131 or stick-type substrate 150 remains.

The threshold voltage Vth [V] is set to a lower value for types of power source units 111 with a higher internal resistance and to a higher value for types of power source units 111 with a lower internal resistance.

In this way, the appropriate threshold voltage Vth [V] is set, depending on the type of power source unit 111, so that the feasibility of heating control in the inhalation device 100 can be appropriately determined.

In addition, secondary batteries, such as lithium-ion batteries, generally degrade with repeated charging and discharging, and the actual charge capacity decreases. In light of this, the control unit 116, for example the MCU 104, may count and store in its memory the number of times the heating control has been performed since it was determined that the power source unit 111 mounted in the power supply unit 110 has been replaced, and for each predetermined number of times the heating control has been performed (for example, 100 times), the battery level indicator 103 may be controlled to decrease the charge capacity CC [Ah] by a predetermined value (for example, 50 [mAh]). This control may, for example, be carried out each time immediately after the predetermined number of times of execution of the heating control has been reached (for example, 100) since the power source unit 111 mounted in the power supply unit 110 is determined to have been replaced.

This enables the battery level indicator 103 to be set to a more realistic value as the charge capacity CC [Ah] of the power source unit 111.

### 11. Charging Control of the Power Source Unit

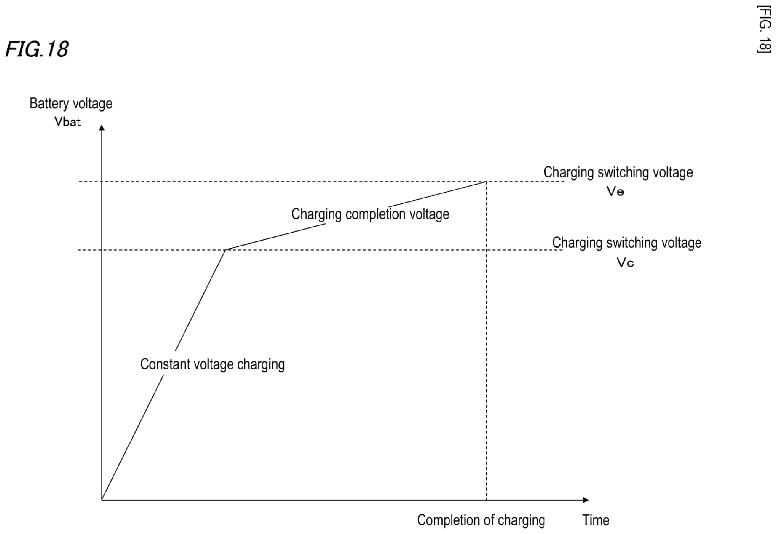

Next, charging control of the power source unit 111 in the inhalation device 100 is described with reference to Fig. 18.

In the inhalation device 100, when commanded by the MCU 104 to start charging, the charging IC 102 performs charging control of the power source unit 111 based on the control value set in the charging IC 102.

The charging IC 102 performs constant current charging when the battery voltage Vbat [V] is less than the charging switching voltage Vc [V], switches to constant voltage charging when the battery voltage Vbat [V] is greater than or equal to the charging switching voltage Vc [V], and finishes charging the power source unit 111 when the end-of-charging voltage Ve [V] is reached.

When the charging IC 102 performs constant current charging, it charges the power source unit 111 with the constant current charging current value Icc [A] stored in the memory. When the charging IC 102 performs constant voltage charging, it charges the power source unit 111 with the constant voltage charging voltage value Vcv [V] stored in the memory.

The magnitude of the current that can flow and the battery voltage Vbat when fully charged differ by type of power source unit 111.

Therefore, if it is assumed that the constant current charging current value Icc [A] and the constant voltage charging voltage value Vcv [V] are fixed values, regardless of the type of power source unit 111, there is a possibility of inconvenience due to the charging time being longer, depending on the type of power source unit 111.

In the present disclosure, appropriate constant current charging current values Icc [A] and constant current charging current values Icc [V] are set, depending on the type of power source unit 111, so that charging of the power source unit 111 can be performed efficiently in a short time.

Also, if it is assumed that the end-of-charging voltage Ve [V] is a fixed value, irrespective of the type of power source unit 111, there is a possibility of inconvenience due to ending the charging the power source unit 111 before the power source unit 111 is fully charged, depending on the type of power source unit 111.

In the present disclosure, depending on the type of power source unit 111, an appropriate end-of-charging voltage Ve [V] is set so that the power source unit 111 can be reliably charged to a fully charged state.

Embodiments of the present invention were described above, but the technical scope of the present invention is not limited to the embodiments above.

For example, in this embodiment, the power source unit 111 is replaced after the operating mode in which the inhalation device 100 is operated has transitioned to the shipping mode. However, it is not limited to shipping mode, and it may also be standby mode or any operating mode in which the power consumption of the inhalation device 100 is lower than that of standby mode. For example, there may be a dedicated operating mode for replacing the power source unit 111, and the power source unit 111 is replaced after the operating mode for the inhalation device 100 is switched to the dedicated operating mode for replacing the power source unit 111.

The present specification sets forth at least the following features. Corresponding components, and so on, in the embodiments described above are shown by way of example in parentheses, but there is no limitation to such components.
(1) A power supply unit (power supply unit 110) of an aerosol-generating device (aerosol-generating device 100) for generating an aerosol by heating an aerosol source comprising: a power source unit (power source unit 111); and
   a control unit (control unit 116) configured to control at least one of charging and discharging of the power source unit,
   wherein
   the power source unit is replaceably and removably installed in the power supply unit, and the control unit is capable of performing an identification process to identify the type of the power source unit mounted in the power supply unit.
   According to (1), the type of power source unit installed in the power supply unit of the aerosol-generating device can be identified.
(2) The power supply unit of an aerosol-generating device as disclosed in (1), wherein in the identification process, the control unit
   obtains the terminal-to-terminal voltage (terminal-to-terminal voltage V) of the power source unit installed in the power supply unit,
   calculates a value of the internal resistance (internal resistance r) of the power source unit based on the terminal-to-terminal voltage, and
   identifies the type of the power source unit based on the calculated value of the internal resistance.
   According to (2), the type of the power source unit can be easily identified and at low cost without the need to separately provide a member or the like for identifying the type of the power source unit.
(3) The power supply unit of an aerosol-generating device as disclosed in (1), wherein the power source unit is provided with an identification resistor (identification resistor R2) of different value for each type, and
   in the identification process, the control unit
   identifies the type of the power source unit based on the identification voltage (identification voltage V2) applied to the identification resistor when power is supplied.
   According to (3), the type of the power source unit can be identified with more accuracy.
(4) The power supply unit of an aerosol-generating device as disclosed in (1), further comprising
   the power source unit is fitted with an identification member (identification member 111f) provided with an identifier capable of identifying the type of the power source unit,
   the power supply unit is provided with a reading sensor (reading sensor 24) capable of reading the identifier provided on the identification member, and
   in the identification process, the control unit
   identifies the type of the power source unit based on information from the identifier read by the reading sensor.
   According to (4), in addition to being able to identify the type of power source unit with more accuracy, more information can be read by the reading sensor from the identifier of the identification member.
(5) The power supply unit of an aerosol-generating device as disclosed in (4), wherein the power source unit comprises a positive electrode terminal (positive electrode terminal 111c) and a negative electrode terminal (negative electrode terminal 111d),
   the power supply unit is provided with a positive terminal connection (positive terminal connection 20a) for electrically connecting to the positive electrode terminal, and a negative terminal connection (negative terminal connection 20b) for electrically connecting to the negative electrode terminal, and
   the positive electrode terminal and the negative electrode terminal are provided on a predetermined same surface constituting an outer surface of the power source unit.
   According to (5), by providing the positive electrode terminal and the negative electrode terminal on the same predetermined surface constituting an outer surface of the power source unit, the identifier provided on the identification member and the reading sensor can be correctly aligned when the power source unit is aligned by pressing in in a predetermined direction when mounting on the power supply unit.
(6) The power supply unit of an aerosol-generating device as disclosed in any of (1) to (5),wherein
   the control unit
   can execute a replacement determination process to determine whether the power source unit mounted in the power supply unit has been replaced, and
   executes the identification process when it is determined in the replacement determination process that the power source unit has been replaced.
   According to (6), the identification process is executed when it is determined that the power source unit has been replaced, so the identification process can be executed at the necessary and appropriate time.
(7) The power supply unit of an aerosol-generating device as disclosed in (6), wherein
   the control unit has a plurality of operating modes for operating the aerosol-generating device,
   the plurality of operating modes includes a first mode (standby mode), and a second mode (shipping mode) in which the aerosol-generating device consumes less power than the first mode, and
   in the replacement determination process, the control unit
   determines that the power source unit has been replaced if the operating mode is moved from the second mode to the first mode after the operating mode has been moved to the second mode.
   According to (7), it is possible to determine whether or not the power source unit has been replaced by means of a simple control.
(8) The power supply unit of an aerosol generation device as disclosed in (6), wherein the power supply unit comprises
   the power supply accommodating portion (power supply accommodating portion 200) for accommodating the power source unit, and
   an opening/closing member (bottom wall portion 21, panel 30) for opening and closing the power supply accommodating portion, and
   in the replacement determination process, the control unit
   determines that the power source unit has been replaced if the opening/closing member is operated and the power supply accommodating portion transitions to the open state, and then the opening/closing member is operated and the power supply accommodating portion transitions to the closed state.
   According to (8), it is possible to determine whether or not the power source unit has been replaced by means of a simple control.
(9) The power supply unit of an aerosol-generating device as disclosed in (1), wherein the control unit
   controls the aerosol-generating device into an unusable state if the type of the power source unit cannot be identified in the identification process.

According to (9), safety is improved because the aerosol-generating device can be disabled when a power source that is not compatible with the aerosol-generating device is mounted in the power supply unit, or when a power source compatible with the aerosol-generating device is not correctly mounted in the power supply unit, and so on.

### REFERENCE SIGNS LIST

100 Inhalation device (aerosol-generating device)
110 Power supply unit
111 Power source unit
111c Positive electrode terminal
111d Negative electrode terminal
111f Identification member
116 Control unit
200 Power supply accommodating portion
20a Positive terminal connection
20b Negative terminal connection
21 Bottom wall portion (opening/closing member)
24 Reading sensor
30 Panel (opening/closing member)
R2 Identification resistor
V Terminal-to-terminal voltage
V2 Identification voltage
r Internal resistance

## Claims

1. A power supply unit of an aerosol-generating device for generating an aerosol by heating an aerosol source comprising: a power source unit; and
a control unit configured to control at least one of charging and discharging of the power source unit,
wherein
the power source unit is replaceably and removably installed in the power supply unit, and
the control unit is capable of performing an identification process to identify the type of the power source unit mounted in the power supply unit.

2. The power supply unit for an aerosol-generating device as claimed in claim 1, wherein
in the identification process, the control unit
obtains the terminal-to-terminal voltage of the power source unit installed in the power supply unit,
calculates a value of the internal resistance of the power source unit based on the terminal-to-terminal voltage, and
identifies the type of the power source unit based on the calculated value of the internal resistance.

3. The power supply unit for an aerosol-generating device as claimed in claim 1, wherein
the power source unit is provided with an identification resistor of different value for each type, and
in the identification process, the control unit
identifies the type of the power source unit based on the identification voltage applied to the identification resistor when power is supplied.

4. The power supply unit for an aerosol-generating device as claimed in claim 1, wherein
the power source unit is fitted with an identification member provided with an identifier capable of identifying the type of the power source unit,
the power supply unit is provided with a reading sensor capable of reading the identifier provided on the identification member, and
in the identification process, the control unit
identifies the type of the power source unit based on information from the identifier read by the reading sensor.

5. The power supply unit for an aerosol-generating device as claimed in claim 4, wherein
the power source unit comprises a positive electrode terminal and a negative electrode terminal,
the power supply unit is provided with a positive terminal connection for electrically connecting to the positive electrode terminal, and a negative terminal connection for electrically connecting to the negative electrode terminal, and
the positive electrode terminal and the negative electrode terminal are provided on a predetermined same surface constituting an outer surface of the power source unit.

6. The power supply unit for an aerosol-generating device as claimed in any one of claims 1 to 5, wherein
the control unit
can execute a replacement determination process to determine whether the power source unit mounted in the power supply unit has been replaced, and
executes the identification process when it is determined in the replacement determination process that the power source unit has been replaced.

7. The power supply unit for an aerosol-generating device as claimed in claim 6, wherein
the control unit has a plurality of operating modes for operating the aerosol-generating device,
the plurality of operating modes includes a first mode, and a second mode in which the aerosol-generating device consumes less power than the first mode, and
in the replacement determination process, the control unit
determines that the power source unit has been replaced if the operating mode is moved from the second mode to the first mode after the operating mode has been moved to the second mode.

8. The power supply unit for an aerosol-generating device as claimed in claim 6, wherein
the power supply unit comprises
the power supply accommodating portion for accommodating the power source unit, and
an opening/closing member for opening and closing the power supply accommodating portion, and
in the replacement determination process, the control unit
determines that the power source unit has been replaced if the opening/closing member is operated and the power supply accommodating portion transitions to the open state, and then the opening/closing member is operated and the power supply accommodating portion transitions to the closed state.

9. The power supply unit for an aerosol-generating device as claimed in claim 1, wherein
the control unit
controls the aerosol-generating device into an unusable state if the type of the power source unit cannot be identified in the identification process.
